# EUROPEAN PATENT APPLICATION

(11) **EP 4 485 187 A1**
(43) Date of publication of application: **01.01.2025**
(21) Application number: 23795277.5
(22) Date of filing: 23.04.2023
(51) Int. Cl.: G06F 9/451, H04M 1/72454, H04W 52/02

(54) **DYNAMIC WALLPAPER DISPLAY METHOD AND APPARATUS, AND ELECTRONIC DEVICE**

(30) Priority: 24.04.2022 CN 202210460688; 30.05.2022 CN 202210600364
(71) Applicant: Huawei Technologies Co., Ltd., Shenzhen, Guangdong 518129 (CN)
(72) Inventor: JIANG, Wang, Shenzhen, Guangdong 518129 (CN); XU, Chuang, Shenzhen, Guangdong 518129 (CN); LU, Lei, Shenzhen, Guangdong 518129 (CN)
(74) Representative: Goddar, Heinz J.
(86) International application number: PCT/CN2023/090061
(87) International publication number: WO 2023/207844

(57) **Abstract**

Embodiments of this application provide a live wallpaper display method and an electronic device. The method is applied to the electronic device, the electronic device uses a live wallpaper theme, and the method includes: The electronic device is in a screen-off wallpaper display state, and when a screen-on operation is detected, displays, to a screen-on wallpaper, from animation effect of switching from a screen-off wallpaper to the screen-on wallpaper. Display directions of the animation effect and the screen-on wallpaper can change with rotation of a body of the electronic device, and the live wallpaper theme includes the screen-off wallpaper and the screen-on wallpaper. According to the method, screen-off wallpaper display and screen-on wallpaper display can be performed in different directions based on a body direction of the electronic device. This conforms to visual inertia of a user. In addition, when the live wallpaper theme is a super wallpaper theme, animations of always on display, lock screen display, and unlocking display of the electronic device can be associatively displayed, thereby improving use experience of the user.

## Description

This application claims priority to Chinese Patent Application No. 202210460688.6, filed with the China National Intellectual Property Administration on April 24, 2022 and entitled "ROTATABLE SUPER WALLPAPER DISPLAY METHOD", which is incorporated herein by reference in its entirety.

This application claims priority to Chinese Patent Application No. 202210600364.8, filed with the China National Intellectual Property Administration on May 30, 2022 and entitled "LIVE WALLPAPER DISPLAY METHOD AND APPARATUS, AND ELECTRONIC DEVICE", which is incorporated herein by reference in its entirety.

### TECHNICAL FIELD

Embodiments of this application relate to the terminal display field, and more specifically, to a live wallpaper display method and apparatus, and an electronic device.

### BACKGROUND

Currently, for example, an electronic device is a mobile phone, screen ratios of most mobile phones are 16:9 or 20:9, the screen ratio is close to 2:1, and a portrait mode is used in most scenarios. Therefore, both a home screen application page and a lock screen application page on the mobile phone are in a portrait orientation. However, on some large-screen electronic devices (such as a foldable screen device and a tablet computer), to meet a use habit of a user, system applications such as home screens and lock screens of the electronic devices can be displayed in a system direction. However, a current live wallpaper (for example, a super wallpaper live theme) and always on display support only the portrait orientation. If a live wallpaper theme is introduced to the large-screen device, a final display direction of the live wallpaper and a final always on display direction may be different from a current system direction of the electronic device, resulting in reduction in user experience.

Therefore, a new live wallpaper display method urgently needs to be provided, so that when the live wallpaper (for example, the super wallpaper theme) is introduced to the electronic device, animations of home screen display, lock screen display, and always on display of the electronic device can be associatively displayed, thereby improving use experience of the user.

### SUMMARY

This application provides a live wallpaper display method and apparatus, and an electronic device. According to the method, lock screen display and always on display can be performed based on a system direction of an electronic device. When a live wallpaper is a super wallpaper theme, animations of home screen display, the lock screen display, and the always on display of the electronic device can be associatively displayed, thereby improving use experience of a user.

According to a first aspect, a live wallpaper display method is provided, where the method is applied to an electronic device, the electronic device uses a live wallpaper theme, and the method includes: displaying a screen-off wallpaper; and when a screen-on operation is detected, displaying, to a screen-on wallpaper, from animation effect of switching from the screen-off wallpaper to the screen-on wallpaper, where display directions of the animation effect and the screen-on wallpaper can change with rotation of a body of the electronic device, and the live wallpaper theme includes the screen-off wallpaper and the screen-on wallpaper.

Optionally, the screen-on wallpaper includes a lock screen wallpaper and/or an unlocking wallpaper.

The unlocking wallpaper may also be referred to as a home screen wallpaper, and the screen-off wallpaper may also be considered as always on display.

Optionally, the screen-on operation may be an unlocking operation.

Optionally, that display directions of the animation effect and the screen-on wallpaper can change with rotation of a body of the electronic device includes: if a body direction of the electronic device rotates from a vertical direction or a partially vertical direction to a horizontal direction or a partially horizontal direction, changing the display directions of the animation effect and the screen-on wallpaper from a portrait orientation to a landscape orientation.

In embodiments of this application, for a problem that the live wallpaper theme can only be displayed in a portrait orientation and cannot be displayed in different system directions of the electronic device in the conventional technology, the live wallpaper display method in which the live wallpaper theme can be displayed in different directions based on the body direction of the electronic device is proposed. When a screen of the electronic device is turned on, the animation effect of switching from the screen-off wallpaper to the screen-on wallpaper is displayed, and the screen-on wallpaper is displayed. The display directions of the animation effect and the screen-on wallpaper can change with the rotation of the body of the electronic device, the screen-off wallpaper can also be displayed in different directions, and visual experience of a user can be improved.

With reference to the first aspect, in a possible implementation, the method includes: when the screen-on operation is detected, in response to unsuccessful unlocking of the electronic device, displaying, to the lock screen wallpaper, from animation effect of switching from the screen-off wallpaper to the lock screen wallpaper.

In other words, if the electronic device fails to be unlocked, in this case, because the unlocking operation is performed, the screen of the electronic device is turned on, displays the animation effect of switching from the screen-off wallpaper to the lock screen wallpaper, and ends up as a lock screen page after display of the animation effect is completed.

The case in which the electronic device fails to be unlocked may be a case in which a fingerprint does not match, facial recognition fails, an unlocking control is incorrectly pressed, or the like. This is not limited in this application.

In embodiments of this application, the unlocking operation is performed on the electronic device when the screen-off wallpaper is displayed. Even if the unlocking fails, the animation effect of switching from the screen-off wallpaper to the lock screen wallpaper is displayed, and the screen ends up as a lock screen wallpaper display page. In this way, even if the user fails to unlock the electronic device, the user can still obtain good visual experience.

With reference to the first aspect, in a possible implementation, the method includes: when the screen-on operation is detected, in response to successful unlocking of the electronic device, displaying, to the unlocking wallpaper, from animation effect of switching from the screen-off wallpaper to the unlocking wallpaper, or displaying, to the unlocking wallpaper, from animation effect of switching from the lock screen wallpaper to the unlocking wallpaper.

In a feasible implementation, the electronic device is unlocked when the electronic device is in an always on display state. When the unlocking succeeds for one time, the screen of the electronic device displays the animation effect of switching from the screen-off wallpaper to the unlocking wallpaper, and ends up as an unlocking page after the display of the animation effect is completed.

In another feasible implementation, the electronic device is unlocked when the electronic device is in an always on display state. The unlocking fails for one time. In this case, because the unlocking operation is performed, the screen of the electronic device is turned on, displays the animation effect of switching from the screen-off wallpaper to the lock screen wallpaper, and ends up as a lock screen page after the display of the animation effect is completed. In this case, when the electronic device is unlocked for another time and the unlocking succeeds, the screen of the electronic device displays the animation effect of switching from the lock screen wallpaper to the unlocking wallpaper, and ends up as an unlocking page after the display of the animation effect is completed.

In embodiments of this application, the unlocking operation is performed on the electronic device when the screen-off wallpaper is displayed. Regardless of whether the unlocking succeeds after one attempt or after a plurality of attempts, wallpaper display corresponding to the electronic device has good visual continuity. In this way, the user can obtain the good visual experience.

With reference to the first aspect, in a possible implementation, the screen-off wallpaper and the screen-on wallpaper have a same visual theme.

Having the same visual theme may be having a same background color or a similar scenery, may be a coherent text, or may be another theme that can generate continuous visual effect. This is not limited in this application.

In embodiments of this application, the screen-off wallpaper and the screen-on wallpaper (the lock screen wallpaper and/or the unlocking wallpaper) have the same visual theme. In this way, a display direction can meet visual inertia of the user, and the screen-off wallpaper and the screen-on wallpaper can also be linked up through display content, so that the connection of the screen-off wallpaper and the screen-on wallpaper have more visual continuity, thereby further improving use experience of the user.

With reference to the first aspect, in a possible implementation, a display direction of the screen-off wallpaper can change with the rotation of the body of the electronic device.

It should be understood that, that a display direction of the screen-off wallpaper changes with the rotation of the body of the electronic device means that the display direction of the screen-off wallpaper is the same as a display direction that is in a lock screen process of the electronic device and that is of displayed animation of switching from the lock screen wallpaper to the screen-off wallpaper; or may also be understood that the display direction of the screen-off wallpaper is related to the body direction of the electronic device when the electronic device switches to the screen-off wallpaper.

In embodiments of this application, the display direction of the screen-off wallpaper can change with the rotation of the body of the electronic device, so that the screen-off wallpaper can be displayed in different directions. In this way, in an unlocking process or the lock screen process of the electronic device, the screen-off wallpaper display can be linked to screen-on wallpaper display. This conforms more to the visual inertia of the user.

With reference to the first aspect, in a possible implementation, the method further includes: receiving a user setting operation; and enabling a first function in response to the setting operation. The first function includes a function of changing a display direction of a live wallpaper with the rotation of the body of the electronic device.

The user setting operation may be enabling a screen auto-rotation function on a notification panel of the electronic device; may be disabling a screen direction locking function on a notification panel of the electronic device; or may be another operation that can enable the first function. This is not limited in this application.

In embodiments of this application, an option is provided for the user whether to enable a wallpaper direction change function, so that the user can flexibly determine, based on a requirement of the user, whether the function needs to be applied, thereby avoiding troubles caused to the user when the user does not need to use the function, and improving the use experience of the user.

With reference to the first aspect, in a possible implementation, the live wallpaper theme is a super wallpaper theme. In a display process of the super wallpaper theme, themes of the screen-off wallpaper and the screen-on wallpaper of the electronic device are the same, and pictures of the screen-off wallpaper and the screen-on wallpaper are in continuity with each other.

In embodiments of this application, when the live wallpaper is the super wallpaper theme, screen-off wallpaper display and screen-on wallpaper display (the lock screen wallpaper and/or the unlocking wallpaper) can end up achieving live wallpaper animation effects associatively in different directions of the electronic device, which further improves the use experience of the user.

With reference to the first aspect, in a possible implementation, the displaying a screen-off wallpaper includes: when an always on display style is used, storing display resources in a first direction and a second direction; and obtaining display resources in a third direction and a fourth direction based on the display resources in the first direction and the second direction; and displaying the screen-off wallpaper based on the body direction of the electronic device and the display resources. The first direction and the third direction have an included angle of 180° in the horizontal direction, and the second direction and the fourth direction have an included angle of 180° in the vertical direction.

For example, the electronic device is a mobile phone. A natural coordinate system of the mobile phone is used as a basis, a first direction is one of a positive direction of an x-axis and a negative direction of the x-axis, and a third direction is the other of the positive direction of the x-axis and the negative direction of the x-axis. The second direction is one of a positive direction of a y-axis and a negative direction of the y-axis, and the fourth direction is the other of the positive direction of the y-axis and the negative direction of the y-axis.

Optionally, a display resource in the first direction includes a bitmap (bitmap) resource in the first direction, and may further include another display resource. This is not limited in this application.

Optionally, a display resource in the second direction includes a bitmap resource in the second direction, and may further include another display resource. This is not limited in this application.

Optionally, a display resource in the third direction includes a bitmap resource in the third direction, and may further include another display resource. This is not limited in this application.

Optionally, a display resource in the fourth direction includes a bitmap resource in the fourth direction, and may further include another display resource. This is not limited in this application.

Specifically, the electronic device performs byte reversal on the display resources (for example, the bitmap resources) in the first direction and the second direction, to obtain the display resources in the third direction and the fourth direction, thereby implementing always on display in different directions. Optionally, the bitmap is stored in AGRB_4444 and RGB565 formats, two bytes represent one pixel, and bitmap reversal is implemented by reversing a byte sequence (that is, reordering bytes).

In embodiments of this application, always on display in the four directions can be implemented based on the body direction of the electronic device and the display resources in the two directions, and the display resources corresponding to the four directions do not need to be stored. The byte reversal only needs to be performed on display resources in two mutually perpendicular directions, to implement the always on display in the four directions, and reduce storage occupation of the electronic device. In addition, a byte rotation speed in embodiments of this application is far faster than a picture rotation speed used in the conventional technology, and display efficiency of the electronic device can be improved.

With reference to the first aspect, in a possible implementation, the displaying a screen-off wallpaper includes: calculating shift information in a current always on display direction of the electronic device relative to the screen of the electronic device based on a ratio of a screen height in the current always on display direction of the electronic device to a screen height in an always on display direction of the electronic device that does not change yet; and displaying the screen-off wallpaper based on the shift information.

Optionally, the shift information includes one or more of a top margin, a shift range, and a shift distance, and may further include other information. This is not limited in this application.

It should be understood that the shift information provides a shiftable area for pixel shift for screen burn-in protection of the always on display of the electronic device, and always on display content adaptively shifts in the shiftable area when the display direction does not change relative to the screen.

A specific shift manner is not limited in embodiments of this application, for example, may be diagonal shift, horizontal shift, upward and downward shift, or may be a combination of a plurality of types of shift.

In addition, an interval at which the shift occurs is not limited in this application. The shift may be performed at any equal intervals, or may be performed at any unequal intervals.

In embodiments of this application, for the always on display in different directions, a fixed initial location, shift range, and shift distance are no longer used. Instead, the proper shift information is adaptively calculated by using the height in the current screen direction, and the always on display and pixel shift for screen burn-in protection in different directions are implemented based on the shift information, so that screen burn-in caused by the always on display can be prevented more effectively, and a service life of the electronic device is prolonged.

With reference to the first aspect, in a possible implementation, the method further includes: displaying the unlocking wallpaper; and when a screen-off operation is detected, displaying, to the screen-off wallpaper, from animation effect of switching from the unlocking wallpaper to the screen-off wallpaper.

In embodiments of this application, the unlocking wallpaper display and the screen-off wallpaper display of the electronic device in the unlocking process can end up achieving animation effects associatively, which improves the use experience of the user.

With reference to the first aspect, in a possible implementation, the method further includes: displaying the lock screen wallpaper; and when a screen-off operation is detected, displaying, to the screen-off wallpaper, from animation effect of switching from the lock screen wallpaper to the screen-off wallpaper.

In embodiments of this application, the lock screen wallpaper display and the screen-off wallpaper display of the electronic device in the unlocking process can end up achieving animation effects associatively, which improves the use experience of the user.

According to a second aspect, a live wallpaper display apparatus is provided, where the apparatus includes: a first display unit, configured to display a screen-off wallpaper; and a second display unit, configured to: when a screen-on operation is detected, display, to a screen-on wallpaper, from animation effect of switching from the screen-off wallpaper to the screen-on wallpaper, where display directions of the animation effect and the screen-on wallpaper can change with rotation of a body of an electronic device, and a live wallpaper theme includes the screen-off wallpaper and the screen-on wallpaper.

Optionally, the screen-on wallpaper includes a lock screen wallpaper and/or an unlocking wallpaper.

The unlocking wallpaper may also be referred to as a home screen wallpaper, and the screen-off wallpaper may also be considered as always on display.

Optionally, the screen-on operation may be an unlocking operation.

Optionally, that display directions of the animation effect and the screen-on wallpaper can change with rotation of a body of the electronic device includes: if a body direction of the electronic device rotates from a vertical direction or a partially vertical direction to a horizontal direction or a partially horizontal direction, changing the display directions of the animation effect and the screen-on wallpaper from a portrait orientation to a landscape orientation.

In embodiments of this application, for a problem that the live wallpaper theme can only be displayed in a portrait orientation and cannot be displayed in different system directions of the electronic device in the conventional technology, the live wallpaper display apparatus that enables the live wallpaper theme to be displayed in different directions based on the body direction of the electronic device is proposed. When a screen of the electronic device is turned on, the animation effect of switching from the screen-off wallpaper to the screen-on wallpaper is displayed, and the screen-on wallpaper is displayed. The display directions of the animation effect and the screen-on wallpaper can change with the rotation of the body of the electronic device, the screen-off wallpaper can also be displayed in different directions, and visual experience of a user can be improved.

With reference to the second aspect, in a possible implementation, the second display unit is specifically configured to: when the screen-on operation is detected, in response to unsuccessful unlocking of the electronic device, display, to the lock screen wallpaper, from animation effect of switching from the screen-off wallpaper to the lock screen wallpaper.

In other words, if the electronic device fails to be unlocked, in this case, because the unlocking operation is performed, the screen of the electronic device is turned on, displays the animation effect of switching from the screen-off wallpaper to the lock screen wallpaper, and ends up as a lock screen page after display of the animation effect is completed.

The case in which the electronic device fails to be unlocked may be a case in which a fingerprint does not match, facial recognition fails, an unlocking control is incorrectly pressed, or the like. This is not limited in this application.

In embodiments of this application, the unlocking operation is performed on the electronic device when the screen-off wallpaper is displayed. Even if the unlocking fails, the animation effect of switching from the screen-off wallpaper to the lock screen wallpaper is displayed, and the screen ends up as a lock screen wallpaper display page. In this way, even if the user fails to unlock the electronic device, the user can still obtain good visual experience.

With reference to the second aspect, in a possible implementation, the second display unit is specifically configured to: when the screen-on operation is detected, in response to successful unlocking of the electronic device, display, to the unlocking wallpaper, from animation effect of switching from the screen-off wallpaper to the unlocking wallpaper, or display, to the unlocking wallpaper, from animation effect of switching from the lock screen wallpaper to the unlocking wallpaper.

In a feasible implementation, the electronic device is unlocked when the electronic device is in an always on display state. When the unlocking succeeds for one time, the second display unit is specifically configured to: display the animation effect of switching from the screen-off wallpaper to the unlocking wallpaper, and end up as an unlocking page after the display of the animation effect is completed.

In another feasible implementation, the electronic device is unlocked when the electronic device is in an always on display state. The unlocking fails for one time. In this case, because the unlocking operation is performed, the screen of the electronic device is turned on, displays the animation effect of switching from the screen-off wallpaper to the lock screen wallpaper, and ends up as a lock screen page after the display of the animation effect is completed. In this case, when the electronic device is unlocked for another time and the unlocking succeeds, the second display unit is specifically configured to: display the animation effect of switching from the lock screen wallpaper to the unlocking wallpaper, and end up as an unlocking page after the display of the animation effect is completed.

In embodiments of this application, the unlocking operation is performed on the electronic device when the screen-off wallpaper is displayed. Regardless of whether the unlocking succeeds after one attempt or after a plurality of attempts, wallpaper display corresponding to the electronic device has good visual continuity. In this way, the user can obtain the good visual experience.

With reference to the second aspect, in a possible implementation, the screen-off wallpaper and the screen-on wallpaper have a same visual theme.

Having the same visual theme may be having a same background color or a similar scenery, may be a coherent text, or may be another theme that can generate continuous visual effect. This is not limited in this application.

In embodiments of this application, the screen-off wallpaper and the screen-on wallpaper (the lock screen wallpaper and/or the unlocking wallpaper) have the same visual theme. In this way, a display direction can meet visual inertia of the user, and the screen-off wallpaper and the screen-on wallpaper can also be linked up through display content, so that the connection of the screen-off wallpaper and the screen-on wallpaper have more visual continuity, thereby further improving use experience of the user.

With reference to the second aspect, in a possible implementation, a display direction of the screen-off wallpaper can change with the rotation of the body of the electronic device.

It should be understood that, that a display direction of the screen-off wallpaper changes with the rotation of the body of the electronic device means that the display direction of the screen-off wallpaper is the same as a display direction that is in a lock screen process of the electronic device and that is of displayed animation of switching from the lock screen wallpaper to the screen-off wallpaper; or may also be understood that the display direction of the screen-off wallpaper is related to the body direction of the electronic device when the electronic device switches to the screen-off wallpaper.

In embodiments of this application, the display direction of the screen-off wallpaper can change with the rotation of the body of the electronic device, so that the screen-off wallpaper can be displayed in different directions. In this way, in an unlocking process or the lock screen process of the electronic device, the screen-off wallpaper display can be linked to screen-on wallpaper display. This conforms more to the visual inertia of the user.

With reference to the second aspect, in a possible implementation, the apparatus further includes: a receiving unit, configured to receive a user setting operation; and an enabling unit, configured to enable a first function in response to the setting operation. The first function includes a function of changing a display direction of a live wallpaper with the rotation of the body of the electronic device.

The user setting operation may be enabling a screen auto-rotation function on a notification panel of the electronic device; may be disabling a screen direction locking function on a notification panel of the electronic device; or may be another operation that can enable the first function. This is not limited in this application.

In embodiments of this application, an option is provided for the user whether to enable a wallpaper direction change function, so that the user can flexibly determine, based on a requirement of the user, whether the function needs to be applied, thereby avoiding troubles caused to the user when the user does not need to use the function, and improving the use experience of the user.

With reference to the second aspect, in a possible implementation, the live wallpaper theme is a super wallpaper theme. In a display process of the super wallpaper theme, themes of the screen-off wallpaper and the screen-on wallpaper of the electronic device are the same, and pictures of the screen-off wallpaper and the screen-on wallpaper are in continuity with each other.

In embodiments of this application, when the live wallpaper is the super wallpaper theme, screen-off wallpaper display and screen-on wallpaper display (the lock screen wallpaper and/or the unlocking wallpaper) can end up achieving live wallpaper animation effects associatively in different directions of the electronic device, which further improves the use experience of the user.

With reference to the second aspect, in a possible implementation, the apparatus further includes: a storage unit, configured to: when an always on display style is used, store display resources in a first direction and a second direction; and a processing unit, configured to obtain display resources in a third direction and a fourth direction based on the display resources in the first direction and the second direction. The first display unit is specifically configured to display the screen-off wallpaper based on the body direction of the electronic device and the display resources. The first direction and the third direction have an included angle of 180° in the horizontal direction, and the second direction and the fourth direction have an included angle of 180° in the vertical direction.

For example, the electronic device is a mobile phone. A natural coordinate system of the mobile phone is used as a basis, a first direction is one of a positive direction of an x-axis and a negative direction of the x-axis, and a third direction is the other of the positive direction of the x-axis and the negative direction of the x-axis. The second direction is one of a positive direction of a y-axis and a negative direction of the y-axis, and the fourth direction is the other of the positive direction of the y-axis and the negative direction of the y-axis.

Optionally, a display resource in the first direction includes a bitmap (bitmap) resource in the first direction, and may further include another display resource. This is not limited in this application.

Optionally, a display resource in the second direction includes a bitmap resource in the second direction, and may further include another display resource. This is not limited in this application.

Optionally, a display resource in the third direction includes a bitmap resource in the third direction, and may further include another display resource. This is not limited in this application.

Optionally, a display resource in the fourth direction includes a bitmap resource in the fourth direction, and may further include another display resource. This is not limited in this application.

Specifically, the electronic device performs byte reversal on the display resources (for example, the bitmap resources) in the first direction and the second direction, to obtain the display resources in the third direction and the fourth direction, thereby implementing always on display in different directions. Optionally, the bitmap is stored in AGRB_4444 and RGB565 formats, two bytes represent one pixel, and bitmap reversal is implemented by reversing a byte sequence (that is, reordering bytes).

In embodiments of this application, always on display in the four directions can be implemented based on the body direction of the electronic device and the display resources in the two directions, and the display resources corresponding to the four directions do not need to be stored. The byte reversal only needs to be performed on display resources in two mutually perpendicular directions, to implement the always on display in the four directions, and reduce storage occupation of the electronic device. In addition, a byte rotation speed in embodiments of this application is far faster than a picture rotation speed used in the conventional technology, and display efficiency of the electronic device can be improved.

With reference to the second aspect, in a possible implementation, the processing unit is further configured to calculate shift information in a current always on display direction of the electronic device relative to the screen of the electronic device based on a ratio of a screen height in the current always on display direction of the electronic device to a screen height in an always on display direction of the electronic device that does not change yet. The first display unit is further specifically configured to display the screen-off wallpaper based on the shift information.

Optionally, the shift information includes one or more of a top margin, a shift range, and a shift distance, and may further include other information. This is not limited in this application.

It should be understood that the shift information provides a shiftable area for pixel shift for screen burn-in protection of the always on display of the electronic device, and always on display content adaptively shifts in the shiftable area when the display direction does not change relative to the screen.

A specific shift manner is not limited in embodiments of this application, for example, may be diagonal shift, horizontal shift, upward and downward shift, or may be a combination of a plurality of types of shift.

In addition, an interval at which the shift occurs is not limited in this application. The shift may be performed at any equal intervals, or may be performed at any unequal intervals.

In embodiments of this application, for the always on display in different directions, a fixed initial location, shift range, and shift distance are no longer used. Instead, the proper shift information is adaptively calculated by using the height in the current screen direction, and the always on display and pixel shift for screen burn-in protection in different directions are implemented based on the shift information, so that screen burn-in caused by the always on display can be prevented more effectively, and a service life of the electronic device is prolonged.

With reference to the second aspect, in a possible implementation, the second display unit is specifically configured to display the unlocking wallpaper. The second display unit and the first display unit are further specifically configured to: when a screen-off operation is detected, display, to the screen-off wallpaper, from animation effect of switching from the unlocking wallpaper to the screen-off wallpaper.

In embodiments of this application, the unlocking wallpaper display and the screen-off wallpaper display of the electronic device in the unlocking process can end up achieving animation effects associatively, which improves the use experience of the user.

With reference to the second aspect, in a possible implementation, the second display unit is specifically configured to display the lock screen wallpaper. The second display unit and the first display unit are further specifically configured to: when a screen-off operation is detected, display, to the screen-off wallpaper, from animation effect of switching from the lock screen wallpaper to the screen-off wallpaper.

In embodiments of this application, the lock screen wallpaper display and the screen-off wallpaper display of the electronic device in the unlocking process can end up achieving animation effects associatively, which improves the use experience of the user.

With reference to the second aspect, in a possible implementation, the electronic device is a foldable screen device, the foldable screen device is in an unfolded state, and the unfolded state includes a fully unfolded state and/or a partially unfolded state.

In embodiments of this application, when the electronic device is the foldable screen device, the foldable screen device can determine, based on whether the foldable screen device is in the unfolded state, whether the live wallpaper needs to be displayed based on the body direction of the electronic device. This can meet different requirements of the user when the user uses the foldable screen device in different statuses, and can further improve the use experience of the user.

According to a third aspect, a live wallpaper display method is provided, where the method is applied to an electronic device, the electronic device uses a live wallpaper theme, and the method includes: receiving a notification of locking a screen of the electronic device; displaying a live wallpaper on a lock screen page based on a current system direction of the electronic device; and performing always on display on a screen-off page based on the current system direction of the electronic device.

Optionally, when the notification of locking the screen of the electronic device is received, it may be determined whether the electronic device needs to display the live wallpaper based on the system direction. When it is determined that the live wallpaper needs to be displayed based on the system direction, the lock screen page displays the live wallpaper based on the current system direction of the electronic device.

Optionally, before the lock screen page displays the live wallpaper based on the current system direction of the electronic device, the current system direction of the electronic device may be first obtained.

The obtaining the current system direction of the electronic device may be obtaining the current system direction of the electronic device based on a current device posture of the electronic device, or may be described as obtaining the current system direction of the electronic device based on a body direction of the electronic device. For example, when the body direction of the electronic device is a horizontal direction or a near-horizontal direction, the system direction of the electronic device is perpendicular to the body direction of the electronic device and is upward along the screen. When the body direction of the electronic device is a vertical direction or a near-vertical direction, the system direction of the electronic device is parallel to the body direction of the electronic device and is upward along the screen.

In embodiments of this application, for a problem that the live wallpaper theme can only be displayed in a portrait orientation and cannot be displayed in different system directions of the electronic device in the conventional technology, a live wallpaper display control method in which the live wallpaper theme can be displayed in different directions of the electronic device based on the system direction is proposed. When the screen of the electronic device is turned off, a lock screen application displays the live wallpaper based on the current system direction, and the screen-off page can implement the always on display in different system directions based on stored display locations and display resources, so that visual experience of a user can be improved. In addition, when the live wallpaper is a super wallpaper theme, home screen display, lock screen display, and the always on display can end up achieving live wallpaper animation effects associatively in different system directions of the electronic device, which further improves use experience of the user.

With reference to the third aspect, in a possible implementation, that the lock screen page displays the live wallpaper based on the current system direction of the electronic device includes: When the electronic device is in a lock screen page display state, if the current system direction of the electronic device changes, a direction of the live wallpaper displayed on the lock screen page dynamically rotates from an original system direction of the electronic device to the current system direction of the electronic device.

Optionally, the live wallpaper is a super wallpaper. In a display process of the super wallpaper, themes of the home screen display, the lock screen page display, and the always on display of the electronic device are the same. In addition, pictures of the home screen display and the lock screen page display of the electronic device are in continuity with each other, and/or pictures of the lock screen page display and the always on display of the electronic device are in continuity with each other.

In embodiments of this application, after the electronic device uses the live wallpaper theme, in a lock screen process of the electronic device, when the current system direction of the electronic device changes in a play process of live wallpaper animation on the lock screen page, the played live wallpaper animation correspondingly and dynamically rotates from the original system direction (a system direction that does not change yet) to the current system direction, a display direction of the screen-off page that is immediately entered is also the same as the current system direction (a system direction obtained when the lock screen display ends) of the electronic device, and a display direction of a home screen also changes based on the change of the current system direction. In this way, even if the user changes the current system direction of the electronic device in the lock screen process, effect of playing the live wallpaper is not affected. When the live wallpaper is the super wallpaper theme, animations of the home screen display, the lock screen display, and the always on display of the electronic device can be associatively displayed, which further improves the use experience of the user.

With reference to the third aspect, in a possible implementation, the performing always on display on a screen-off page based on the current system direction includes: when an always on display style is used, storing display resources in a first system direction and a second system direction; obtaining display resources in a third system direction and a fourth system direction based on the display resources in the first system direction and the second system direction; and finally performing the always on display on the screen-off page based on the current system direction of the electronic device and a display resource in the current system direction. System directions include the first system direction, the second system direction, the third system direction, and the fourth system direction. When the electronic device is placed vertically, the first system direction and the third system direction are perpendicular to the left side of the electronic device, and form an included angle of 180° on a plane on which the screen of the electronic device is located. The second direction and the fourth direction are perpendicular to the upper side of the electronic device, and form an included angle of 180° on the plane on which the screen of the electronic device is located.

Optionally, the display resource in the first system direction includes a bitmap (bitmap) resource in the first system direction, and may further include another display resource. This is not limited in this application.

Optionally, the display resource in the second system direction includes a bitmap resource in the second system direction, and may further include another display resource. This is not limited in this application.

Optionally, the display resource in the third system direction includes a bitmap resource in the third system direction, and may further include another display resource. This is not limited in this application.

Optionally, the display resource in the fourth system direction includes a bitmap resource in the fourth system direction, and may further include another display resource. This is not limited in this application.

Specifically, the electronic device performs byte reversal on the display resources (for example, the bitmap resources) in the first system direction and the second system direction, to obtain the display resources in the third system direction and the fourth system direction, thereby implementing the always on display in different system directions. Optionally, the bitmap is stored in AGRB_4444 and RGB565 formats, two bytes represent one pixel, and bitmap reversal is implemented by reversing a byte sequence (that is, reordering bytes).

In embodiments of this application, always on display in the four system directions of the electronic device can be implemented based on the current system direction, a display location in the current system direction, and display resources in two system directions, and the display resources corresponding to the four system directions do not need to be stored. The byte reversal only needs to be performed on display resources in two mutually perpendicular system directions, to implement the always on display in the four system directions, and reduce storage occupation of the electronic device. In addition, a byte rotation speed in embodiments of this application is far faster than a picture rotation speed used in the conventional technology, and display efficiency of the electronic device can be improved.

With reference to the third aspect, in a possible implementation, the performing always on display on a screen-off page based on the current system direction of the electronic device includes: calculating shift information in the current system direction relative to the screen based on a ratio of a screen height in the current system direction to a screen height in an original system direction; and performing the always on display based on the current system direction and the shift information.

The original system direction is a system direction before the system direction of the electronic device is switched to the current system direction. For example, the system direction of the electronic device is the first system direction. The user changes the device posture of the electronic device, so that the system direction of the electronic device is switched to the second system direction. In this case, the current system direction of the electronic device is the second system direction, and the original system direction of the electronic device is the first system direction.

The shift information includes one or more of a top margin, a shift range, and a shift distance, and may further include other information. This is not limited in this application.

It should be understood that the shift information provides a shiftable area for pixel shift for screen burn-in protection of the always on display of the electronic device, and always on display content adaptively shifts in the shiftable area when the display direction does not change relative to the screen.

A specific shift manner is not limited in embodiments of this application, for example, may be diagonal shift, horizontal shift, upward and downward shift, or may be a combination of a plurality of types of shift.

In addition, an interval at which the shift occurs is not limited in this application. The shift may be performed at any equal intervals, or may be performed at any unequal intervals.

In embodiments of this application, for the always on display in different system directions, a fixed initial location, shift range, and shift distance are no longer used. Instead, the proper shift information is adaptively calculated by using the height in the current screen direction, and the always on display and pixel shift for screen burn-in protection in different system directions are implemented based on the shift information, so that screen burn-in caused by the always on display can be prevented more effectively, and a service life of the electronic device is prolonged.

With reference to the third aspect, in a possible implementation, the method further includes: receiving a notification of unlocking the electronic device; displaying the live wallpaper on the lock screen page based on the current system direction of the electronic device; and displaying a home screen wallpaper on the home screen based on the current system direction of the electronic device.

The home screen wallpaper may be understood as an unlocking wallpaper.

It should be understood that when the user performs an unlocking operation on the electronic device, the electronic device receives the notification of unlocking the electronic device. Before the unlocking operation is performed on the electronic device, the electronic device is in a screen-off state or on an always on display page.

Optionally, when the electronic device is unlocked, if the current system direction of the electronic device is different from a display direction of the screen-off page, the lock screen page displays pictures of the live wallpaper dynamically rotating from the display direction of the screen-off page to the current system direction.

In embodiments of this application, the electronic device uses the live wallpaper. When a display interface of the electronic device is on the screen-off page, and the current system direction of the electronic device is the same as the display direction of the screen-off page, the user performs a screen unlocking operation on the electronic device when the current system direction does not change, and the display interface of the electronic device sequentially displays a screen-off wallpaper, a lock screen wallpaper (the live wallpaper), and the home screen wallpaper. In addition, display directions of the screen-off wallpaper, the lock screen wallpaper, and the home screen wallpaper are the same as the current system direction, and can conform to visual inertia of the user. In addition, when the live wallpaper is the super wallpaper theme, the animations of the always on display, the lock screen display, and the home screen display of the electronic device can be associatively displayed, which improves the use experience of the user.

Alternatively, when a display interface of the electronic device is on the screen-off page, and the current system direction of the electronic device is different from the display direction of the screen-off page, the user performs a screen unlocking operation on the electronic device. There is a process of a direction, of the live wallpaper displayed on the lock screen page, dynamically rotating from the original system direction (the display direction of the screen-off page) to the current system direction, so that the screen-off wallpaper displayed on the screen-off page and the live wallpaper displayed on the lock screen page can be visually in continuity with each other, and a direction of the home screen wallpaper displayed on the home screen is the same as a direction (the current system direction) obtained when the live wallpaper display on the lock screen page ends. In this way, when the screen of the electronic device is unlocked, even if a direction of an always on display wallpaper is inconsistent with the current system direction, the animations of the always on display, the lock screen display, and the home screen display of the electronic device can be associatively displayed, which further improves the use experience of the user.

With reference to the third aspect, in a possible implementation, the method further includes: when it is determined that the electronic device does not need to display the live wallpaper based on the system direction, displaying the live wallpaper on the lock screen page of the electronic device in a portrait orientation.

In embodiments of this application, when the electronic device does not need to display the live wallpaper based on the system direction, the electronic device displays the live wallpaper in the portrait orientation by default, and both the home screen display and the always on display of the electronic device are in a portrait orientation that is the same as a direction of the lock screen display. In this way, when the live wallpaper is the super wallpaper theme, the animations of the always on display, the lock screen display, and the home screen display of the electronic device can alternatively be associatively displayed, and a plurality of requirements of the user can be met.

According to a fourth aspect, a live wallpaper display apparatus is provided, where the apparatus includes: a receiving module, configured to receive a notification of locking a screen of an electronic device; a first display module, configured to display a live wallpaper on a lock screen page based on a current system direction of the electronic device; and a second display module, configured to perform always on display on a screen-off page based on the current system direction of the electronic device.

Optionally, the apparatus further includes a determining module, configured to: when a screen of the electronic device is locked, determine whether the electronic device needs to display super wallpaper animation based on the system direction; and when determining that the live wallpaper needs to be displayed based on the system direction, display the live wallpaper on the lock screen page based on the current system direction of the electronic device.

Optionally, the apparatus further includes an obtaining module, and the obtaining module is configured to obtain the current system direction of the electronic device.

That the obtaining module obtains the current system direction of the electronic device may be obtaining, by the obtaining module, the current system direction of the electronic device based on a current device posture of the electronic device, or may be described as obtaining, by the obtaining module, the current system direction of the electronic device based on a body direction of the electronic device. For example, when the body direction of the electronic device is a horizontal direction or a near-horizontal direction, the system direction of the electronic device is perpendicular to the body direction of the electronic device and is upward along the screen. When the body direction of the electronic device is a vertical direction or a near-vertical direction, the system direction of the electronic device is parallel to the body direction of the electronic device and is upward along the screen.

In embodiments of this application, for a problem that a live wallpaper theme can only be displayed in a portrait orientation and cannot be displayed in different system directions of the electronic device in the conventional technology, the live wallpaper display control apparatus that can display the live wallpaper theme in different directions of the electronic device based on the system direction is provided. When the screen of the electronic device is turned off, the lock screen page can display the live wallpaper based on the current system direction, and always on display in different system directions can be implemented based on stored display locations and display resources, so that visual experience of a user can be improved. In addition, when the live wallpaper is a super wallpaper theme, home screen display, lock screen display, and the always on display can end up achieving live wallpaper animation effects associatively in different system directions of the electronic device, which further improves use experience of the user.

With reference to the fourth aspect, in a possible implementation, the first display module is further specifically configured to: when the electronic device is in a lock screen page display state, and the current system direction of the electronic device changes, display, on the lock screen page, animation of the live wallpaper dynamically rotating from an original system direction of the electronic device to the current system direction of the electronic device.

Optionally, the live wallpaper is a super wallpaper. In a display process of the super wallpaper, themes of the home screen display, the lock screen page display, and the always on display of the electronic device are the same. In addition, pictures of the home screen display and the lock screen page display of the electronic device are in continuity with each other, and/or pictures of the lock screen page display and the always on display of the electronic device are in continuity with each other.

In embodiments of this application, after the electronic device uses the live wallpaper theme, in a lock screen process of the electronic device, when the current system direction of the electronic device changes in a play process of live wallpaper animation on the lock screen page, the played live wallpaper animation correspondingly and dynamically rotates from the original system direction (a system direction that does not change yet) to the current system direction, a display direction of the screen-off page that is immediately entered is also the same as the current system direction (a system direction obtained when the lock screen display ends) of the electronic device, and a display direction of a home screen also changes based on the change of the current system direction. In this way, even if the user changes the current system direction of the electronic device in the lock screen process, effect of playing the live wallpaper is not affected. When the live wallpaper is the super wallpaper theme, animations of the home screen display, the lock screen display, and the always on display of the electronic device can be associatively displayed, which further improves the use experience of the user.

With reference to the fourth aspect, in a possible implementation, the apparatus further includes: a storage module, configured to: when an always on display style is used, store display resources in a first system direction and a second system direction; and a processing module, configured to obtain display resources in a third system direction and a fourth system direction based on the display resources in the first system direction and the second system direction. In addition, the second display module is specifically configured to perform the always on display on the screen-off page based on the current system direction of the electronic device and a display resource in the current system direction. System directions include the first system direction, the second system direction, the third system direction, and the fourth system direction. When the electronic device is placed vertically, the first system direction and the third system direction are perpendicular to the left side of the electronic device, and form an included angle of 180° on a plane on which the screen of the electronic device is located. The second system direction and the fourth system direction are perpendicular to the upper side of the electronic device, and form an included angle of 180° on the plane on which the screen of the electronic device is located.

Optionally, the display resource in the first system direction includes a bitmap (bitmap) resource in the first system direction, and may further include another display resource. This is not limited in this application.

Optionally, the display resource in the second system direction includes a bitmap resource in the second system direction, and may further include another display resource. This is not limited in this application.

Optionally, the display resource in the third system direction includes a bitmap resource in the third system direction, and may further include another display resource. This is not limited in this application.

Optionally, the display resource in the fourth system direction includes a bitmap resource in the fourth system direction, and may further include another display resource. This is not limited in this application.

Specifically, the processing module performs byte reversal on the display resources (for example, the bitmap resources) in the first system direction and the second system direction, to obtain the display resources in the third system direction and the fourth system direction, thereby implementing the always on display in different system directions.

Optionally, the bitmap is stored in AGRB_4444 and RGB565 formats, two bytes represent one pixel, and bitmap reversal is implemented by reversing a byte sequence (that is, reordering bytes).

In embodiments of this application, always on display in the four system directions of the electronic device can be implemented based on the current system direction, a display location in the current system direction, and display resources in two system directions, and the display resources corresponding to the four system directions do not need to be stored. The byte reversal only needs to be performed on display resources in two mutually perpendicular system directions, to implement the always on display in the four system directions, and reduce storage occupation of the electronic device. In addition, a byte rotation speed in embodiments of this application is far faster than a picture rotation speed used in the conventional technology, and display efficiency of the electronic device can be improved.

With reference to the fourth aspect, in a possible implementation, the processing module is further configured to: calculate shift information in the current system direction relative to the screen based on a ratio of a screen height in the current system direction of the electronic device to a screen height in an original system direction. The second display module is further specifically configured to perform the always on display based on the current system direction and the shift information.

The original system direction is a system direction before the system direction of the electronic device is switched to the current system direction. For example, the system direction of the electronic device is the first system direction. The user changes the device posture of the electronic device, so that the system direction of the electronic device is switched to the second system direction. In this case, the current system direction of the electronic device is the second system direction, and the original system direction of the electronic device is the first system direction.

The shift information includes one or more of a top margin, a shift range, and a shift distance, and may further include other information. This is not limited in this application.

It should be understood that the shift information provides a shiftable area for pixel shift for screen burn-in protection of the always on display of the electronic device, and always on display content adaptively shifts in the shiftable area when the display direction does not change relative to the screen.

A specific shift manner is not limited in embodiments of this application, for example, may be diagonal shift, horizontal shift, upward and downward shift, or may be a combination of a plurality of types of shift.

In addition, an interval at which the shift occurs is not limited in this application. The shift may be performed at any equal intervals, or may be performed at any unequal intervals.

In embodiments of this application, for the always on display in different system directions, a fixed initial location, shift range, and shift distance are no longer used. Instead, the proper shift information is adaptively calculated by using the height in the current screen direction, and the always on display and pixel shift for screen burn-in protection in different system directions are implemented based on the shift information, so that screen burn-in can be prevented more effectively, and a service life of the electronic device is prolonged.

With reference to the fourth aspect, in a possible implementation, the receiving module is further configured to receive a notification of unlocking the electronic device. The first display module is further configured to display the live wallpaper on the lock screen page based on the current system direction of the electronic device. In addition, the apparatus further includes a third display module, configured to display a home screen wallpaper on the home screen based on the current system direction of the electronic device.

The home screen wallpaper may be understood as an unlocking wallpaper.

It should be understood that when the user performs an unlocking operation on the electronic device, the electronic device receives the notification of unlocking the electronic device. Before the unlocking operation is performed on the electronic device, the electronic device is in a screen-off state or on an always on display page.

Optionally, when the electronic device is unlocked, if the current system direction of the electronic device is different from a display direction of the screen-off page, the first display module is further configured to display, on the lock screen page, pictures of the live wallpaper dynamically rotating from the display direction of the screen-off page to the current system direction.

Optionally, two or more display modules of the first display module, the second display module, and the third display module may be integrated into one general display module, and the integrated general display module has all functions of the two or more display modules.

In embodiments of this application, the electronic device uses the live wallpaper. When a display interface of the electronic device is on the screen-off page, and the current system direction of the electronic device is the same as the display direction of the screen-off page, the user performs a screen unlocking operation on the electronic device when the current system direction does not change, and the display interface of the electronic device sequentially displays a screen-off wallpaper, a lock screen wallpaper (the live wallpaper), and the home screen wallpaper. In addition, display directions of the screen-off wallpaper, the lock screen wallpaper, and the home screen wallpaper are the same as the current system direction, and can conform to visual inertia of the user. In addition, when the live wallpaper is the super wallpaper theme, the animations of the always on display, the lock screen display, and the home screen display of the electronic device can be associatively displayed, which improves the use experience of the user.

Alternatively, when a display interface of the electronic device is on the screen-off page, and the current system direction of the electronic device is different from the display direction of the screen-off page, the user performs a screen unlocking operation on the electronic device. There is a process of a direction, of the live wallpaper displayed on the lock screen page, dynamically rotating from the original system direction (the display direction of the screen-off page) to the current system direction, so that the screen-off wallpaper displayed on the screen-off page and the live wallpaper displayed on the lock screen page can be visually in continuity with each other, and a direction of the home screen wallpaper displayed on the home screen is the same as a direction (the current system direction) obtained when the live wallpaper display on the lock screen page ends. In this way, when the screen of the electronic device is unlocked, even if a direction of an always on display wallpaper is inconsistent with the current system direction, the animations of the always on display, the lock screen display, and the home screen display of the electronic device can be associatively displayed, which further improves the use experience of the user.

With reference to the fourth aspect, in a possible implementation, the electronic device is a foldable screen device.

Optionally, the first display module is further specifically configured to: when the foldable screen device is in an unfolded state, display the live wallpaper on the lock screen page based on a current system direction of the foldable screen device, where the unfolded state includes a fully unfolded state and/or a partially unfolded state.

In embodiments of this application, when the electronic device is the foldable screen device, the foldable screen device can determine, based on whether the foldable screen device is in the unfolded state, whether the live wallpaper and the screen-off wallpaper need to be displayed based on the system direction. When the foldable screen device is in the unfolded state, by default, the live wallpaper and the screen-off wallpaper need to be displayed based on the system direction. This can meet different requirements of the user when the user uses the foldable screen device in different statuses, and can further improve the use experience of the user.

With reference to the fourth aspect, in a possible implementation, the first display module is further configured to: when it is determined that the electronic device does not need to display the live wallpaper based on the system direction, display the live wallpaper on the lock screen page in a portrait orientation.

In embodiments of this application, when the electronic device does not need to display the live wallpaper based on the system direction, the electronic device displays the live wallpaper in the portrait orientation by default, and both the home screen display and the always on display of the electronic device are in a portrait orientation that is the same as a direction of the lock screen display. In this way, when the live wallpaper is the super wallpaper theme, the animations of the always on display, the lock screen display, and the home screen display of the electronic device can alternatively be associatively displayed, and a plurality of requirements of the user can be met.

According to a fifth aspect, an electronic device is provided, where the electronic device includes a memory and a processor. The memory is configured to store computer program code, and the processor is configured to execute the computer program code stored in the memory, to implement the method according to any one of the first aspect or the possible implementations of the first aspect or the method according to any one of the third aspect or the possible implementations of the third aspect.

According to a sixth aspect, a display system is provided, where the display system includes the electronic device according to the fifth aspect.

According to a seventh aspect, a chip is provided, where the chip stores instructions. When the instructions are run on a device, the chip is enabled to perform the method according to any one of the first aspect or the possible implementations of the first aspect, the method according to any one of the second aspect or the possible implementations of the second aspect, or the method according to any one of the third aspect or the possible implementations of the third aspect.

According to an eighth aspect, a computer-readable storage medium is provided, where the computer-readable storage medium stores a computer program or instructions. When the computer program or the instructions are executed, the method according to any one of the first aspect or the possible implementations of the first aspect or the method according to any one of the third aspect or the possible implementations of the third aspect is implemented.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3(a), FIG. 3(b), and FIG. 3(c) are a diagram of an interface for displaying a live wallpaper in the conventional technology according to an embodiment of this application;
FIG. 4(a), FIG. 4(b), and FIG. 4(c) are a diagram of an interface for displaying a live wallpaper according to an embodiment of this application;
FIG. 5 is a diagram of an interface for enabling a screen rotation function of an electronic device according to an embodiment of this application;
FIG. 6(a), FIG. 6(b), FIG. 6(c), FIG. 6(d), and FIG. 6(e) are a diagram of an interface for displaying a super wallpaper according to an embodiment of this application;
FIG. 7(a), FIG. 7(b), FIG. 7(c), FIG. 7(d), and FIG. 7(e) are a diagram of still another interface for displaying a super wallpaper according to an embodiment of this application;
FIG. 8(a), FIG. 8(b), FIG. 8(c), FIG. 8(d), FIG. 8(e), and FIG. 8(f) are a diagram of yet another interface for displaying a super wallpaper according to an embodiment of this application;
FIG. 9(a), FIG. 9(b), and FIG. 9(c) are a diagram of still another interface for displaying a live wallpaper according to an embodiment of this application;
FIG. 10(a), FIG. 10(b), FIG. 10(c), and FIG. 10(d) are a diagram of still another interface for displaying a super wallpaper according to an embodiment of this application;
FIG. 11(a), FIG. 11(b), FIG. 11(c), and FIG. 11(d) are a diagram of still another interface for displaying a super wallpaper according to an embodiment of this application;
FIG. 12(a), FIG. 12(b), FIG. 12(c), FIG. 12(d), and FIG. 12(e) are a diagram of yet another interface for displaying a super wallpaper according to an embodiment of this application;
FIG. 13 is a schematic flowchart of a live wallpaper display method according to an embodiment of this application;
FIG. 14 is a schematic flowchart of another live wallpaper display method according to an embodiment of this application;
FIG. 15 is a schematic flowchart of a super wallpaper display method according to an embodiment of this application;
FIG. 16 is a schematic flowchart of still another live wallpaper display method according to an embodiment of this application;
FIG. 17 is a schematic flowchart of an always on display method according to an embodiment of this application;
FIG. 18 is a diagram of an always on display interface in different system directions according to an embodiment of this application;
FIG. 19(a) and FIG. 19(b) are a diagram of location coordinate conversion for always on display according to an embodiment of this application;
FIG. 20 is a schematic flowchart of another always on display method according to an embodiment of this application;
FIG. 21 is a diagram of pixel shift for screen burn-in protection of always on display in different system directions according to an embodiment of this application;
FIG. 22 is a diagram of functional modules of a live wallpaper display apparatus according to an embodiment of this application; and
FIG. 23 is a diagram of functional modules of another live wallpaper display apparatus according to an embodiment of this application.

### DESCRIPTION OF EMBODIMENTS

The following describes technical solutions of this application with reference to accompanying drawings. It is clear that the described embodiments are merely some but not all of embodiments of this application.

The following describes the technical solutions in embodiments of this application with reference to the accompanying drawings in embodiments of this application. In the description of embodiments of this application, unless otherwise specified, "/" means "or". For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the description of embodiments of this application, "multiple" or "a plurality of" means two or more.

In the following description, the terms "first" and "second" are merely intended for a purpose of description, and shall not be understood as indicating or implying relative importance or implying a quantity of indicated technical features. Therefore, a feature limited by "first" or "second" may explicitly or implicitly include one or more features. In the description of embodiments, unless otherwise specified, "a plurality of" means two or more.

A method according to embodiments of this application may be applied to an electronic device like a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

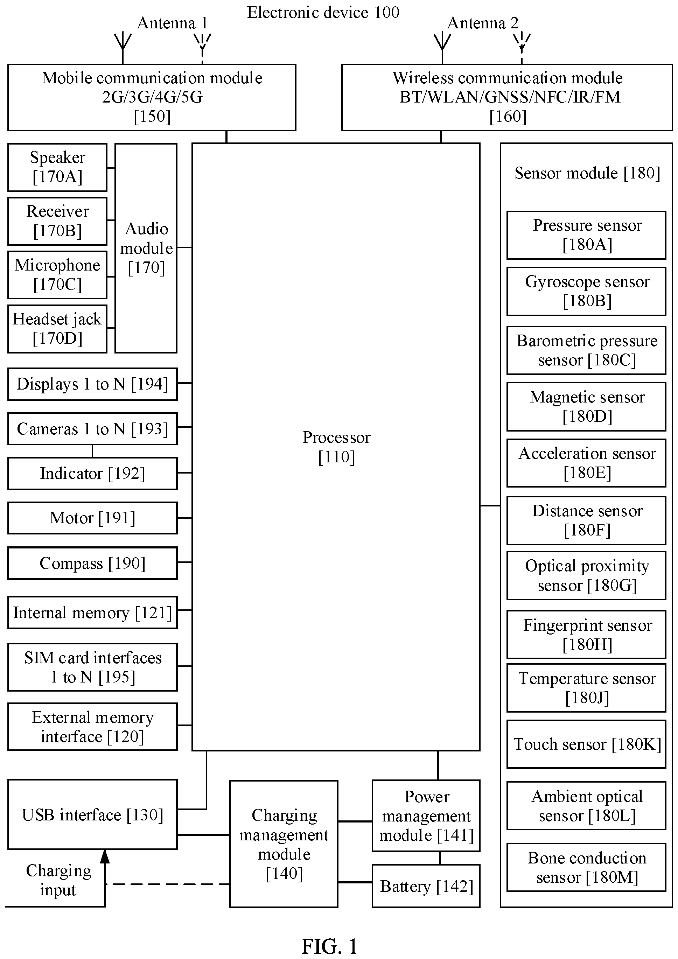

For example, FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient optical sensor 180L, a bone conduction sensor 180M, and the like.

It may be understood that an example structure in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

The memory may be further disposed in the processor 110, to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and therefore, improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may also be used for audio communication, to sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call by using a Bluetooth headset. Both the I2S interface and the PCM interface may be used for audio communication.

The UART interface is a universal serial data bus used for asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), or the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device. The USB interface 130 may alternatively be configured to connect to a headset, to play audio by using the headset. The interface may be further configured to connect to another electronic device, for example, an AR device.

It may be understood that an interface connection relationship between modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input by using a wireless charging coil of the electronic device 100. The charging management module 140 may further supply power to the electronic device by using the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communication module 150 may provide a solution of wireless communication that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the amplified signal into an electromagnetic wave through the antenna 1 for radiation. In some embodiments, at least some functional modules of the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (not limited to the speaker 170A, the receiver 170B, and the like), and displays an image or a video by using the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components that integrate at least one communication processor module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the modulated and amplified signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time division-synchronous code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further tune parameters such as exposure and a color temperature of a photographing scenario. In some embodiments, the ISP may be disposed in the camera 193.

The camera 193 is configured to capture a static image or a video. An optical image of an object is generated through the lens, and is projected to the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to a digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a biological neural network structure, for example, by referring to a mode of transfer between human brain neurons, and may further continuously perform self-learning. Applications such as intelligent cognition of the electronic device 100 may be implemented by using the NPU, for example, image recognition, facial recognition, speech recognition, and text understanding.

The external memory interface 120 may be configured to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an app required by at least one function (for example, a sound playing function or an image playing function), and the like. The data storage area may store data (for example, audio data and a phone book) and the like created during usage of the electronic device 100. In addition, the internal memory 121 may include a high-speed random access memory, or may include a non-volatile memory, for example, at least one magnetic disk storage device, a flash memory, or a universal flash storage (universal flash storage, UFS).

The electronic device 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode by using the speaker 170A.

The receiver 170B, also referred to as an "earpiece", is configured to convert an audio electrical signal into a sound signal. When a call is answered or speech information is received by using the electronic device 100, the receiver 170B may be put close to a human ear to listen to a voice.

The microphone 170C, also referred to as "mike" or "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, thereby implementing a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure strength based on the change in the capacitance. When a touch operation is performed on the display 194, the electronic device 100 detects strength of the touch operation by using the pressure sensor 180A. The electronic device 100 may also calculate a touch location based on a detection signal of the pressure sensor 180A. In some embodiments, touch operations that are performed in a same touch location but have different touch operation strength may correspond to different operation instructions. For example, when a touch operation whose touch operation strength is less than a first pressure threshold is performed on an SMS message application icon, an instruction for viewing an SMS message is performed. When a touch operation whose touch operation strength is greater than or equal to the first pressure threshold is performed on the SMS message application icon, an instruction for creating an SMS message is performed.

The gyroscope sensor 180B may be configured to determine a moving posture of the electronic device 100. In some embodiments, an angular velocity of the electronic device 100 around three axes (that is, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in a navigation scenario and a motion-sensing game scenario.

The barometric pressure sensor 180C is configured to measure barometric pressure. In some embodiments, the electronic device 100 calculates an altitude by using a barometric pressure value measured by the barometric pressure sensor 180C, to assist in positioning and navigation.

The magnetic sensor 180D includes a Hall sensor. The electronic device 100 may detect opening and closing of a flip smart cover by using the magnetic sensor 180D. In some embodiments, when the electronic device 100 is a clamshell phone, the electronic device 100 may detect opening and closing of a flip cover by using the magnetic sensor 180D. Further, a feature like automatic unlocking of the flip cover is set based on a detected opening or closing state of the smart cover or a detected opening or closing state of the flip cover.

The acceleration sensor 180E may detect acceleration in various directions (usually on three axes) of the electronic device 100. When the electronic device 100 is still, a magnitude and a direction of gravity may be detected. The acceleration sensor 180E may be further configured to identify a posture of the electronic device, and is applied to an application like switching between a landscape mode and a portrait mode or a pedometer.

The distance sensor 180F is configured to measure a distance. The electronic device 100 may measure the distance by using infrared or laser. In some embodiments, in a photographing scenario, the electronic device 100 may measure a distance by using the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically unlock or lock the screen.

The ambient optical sensor 180L is configured to sense ambient light brightness. The electronic device 100 may adaptively adjust brightness of the display 194 based on the sensed ambient light brightness. The ambient optical sensor 180L may also be configured to automatically adjust white balance during photographing. The ambient optical sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 form a "touchscreen". The touch sensor 180K is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal. In some embodiments, the bone conduction sensor 180M may alternatively be disposed in a headset, to obtain a bone conduction headset. The audio module 170 may obtain a voice signal through parsing based on the vibration signal that is of the vibration bone of the vocal part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be used for an incoming call vibration prompt, or may be used for a touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, a game) may also correspond to different vibration feedback effect. Touch vibration feedback effect may be further customized.

The indicator 192 may be an indicator light, and may indicate a charging status and a power change, or may indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network by using the SIM card, to implement functions such as calling and data communication. In some embodiments, the electronic device 100 uses an embedded SIM (embedded SIM, eSIM) card, that is, an embedded SIM card. The eSIM card may be embedded into the electronic device 100, and cannot be separated from the electronic device 100.

It should be understood that a calling card in embodiments of this application includes but is not limited to a SIM card, an eSIM card, a universal subscriber identity module (universal subscriber identity module, USIM), a universal integrated circuit card (universal integrated circuit card, UICC), and the like.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

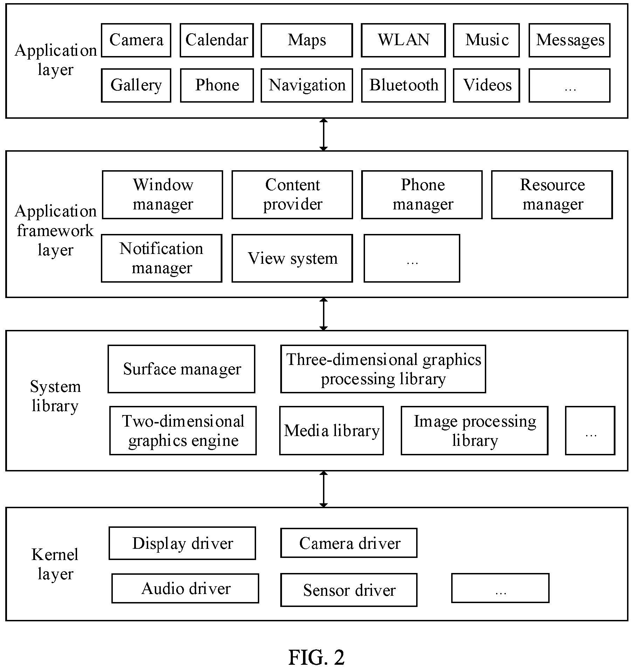

FIG. 2 is a block diagram of the software structure of the electronic device 100 according to an embodiment of this application. In a layered architecture, software is divided into several layers, and each layer has a clear role and task. Layers communicate with each other through a software interface. In some embodiments, the Android system is divided into four layers: an application layer, an application framework layer, an Android runtime (Android runtime) and system library, and a kernel layer. The application layer may include a series of application packages.

As shown in FIG. 2, an application package may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, lock a screen, take a screenshot, and the like.

The content provider is configured to store and obtain data, and enable the data to be accessed by an application. The data may include a video, an image, audio, calls that are made and answered, a browsing history and bookmarks, an address book, and the like.

The view system includes visual controls such as a control for displaying text and a control for displaying a picture. The view system may be configured to construct an application. A display interface may include one or more views. For example, a display interface including an SMS notification icon may include a text display view and a picture display view.

The phone manager is configured to provide a communication function of the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear as a short pop-up without requiring a user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on a screen in a form of a dialog window. For example, text information is displayed in the status bar, an alert sound is played, the electronic device vibrates, or the indicator light blinks.

The Android runtime includes a kernel library and a virtual machine. The Android runtime is responsible for scheduling and management of the Android system.

The kernel library includes two parts: a function that needs to be invoked by the Java language and a kernel library of Android.

The application layer and the application framework layer run on the virtual machine. The virtual machine executes Java files at the application layer and the application framework layer as binary files. The virtual machine is configured to implement functions such as object lifecycle management, stack management, thread management, security and abnormality management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording of a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and HarmonyOS.

The technical solutions in embodiments of this application may be applied to an electronic device that has a screen and a lock screen function. For example, the method may be applied to a large-screen terminal device like a foldable screen device or a tablet computer. A main application scenario may be implementing, on the large-screen terminal device, screen-on/off animation display in different directions and always on display in different directions. Different directions are different directions of a display picture on a display of the terminal device relative to the display.

The electronic device in embodiments of this application may be a television, a desktop computer, or a notebook computer; may be a portable electronic device like a mobile phone, a tablet computer, a camera, a video camera, or a video recorder; or may be another electronic device having a screen display function, an electronic device in a 5G network, an electronic device in a future evolved public land mobile network (public land mobile network, PLMN), or the like. This is not limited in this application.

Currently, for example, a live wallpaper is a super wallpaper theme. An application scope of the super wallpaper theme includes a desktop, a lock screen page, and a screen-off page of the electronic device. Associative animation of the super wallpaper theme is displayed by the lock screen page of the electronic device. The lock screen page plays associative animation of the super wallpaper theme in a form of live wallpaper. The associative animation, and home screen display content and always on display content that are of the electronic device are in a same theme, and pictures are in continuity with each other. Further, animations of the three scenarios, home screen display, lock screen display, and always on display, of the electronic device can be associatively displayed.

However, in the conventional technology, the super wallpaper theme supports only a portrait orientation on an electronic device, and super wallpaper animation display in different directions is not supported. The super wallpaper theme cannot be adapted to an electronic device (for example, a foldable screen device or a tablet computer) that supports display in different directions. In addition, the always on display in different directions of the electronic device is not supported, and a same direction cannot be maintained for a lock screen application and a home screen application on the electronic device (the foldable screen device, the tablet computer, or the like) that supports the display in different directions. As a result, the associative animation of the super wallpaper theme cannot be displayed.

In view of this, this application provides a live wallpaper display control method and apparatus, and an electronic device. The method can implement live wallpaper display in different system directions and always on display in different system directions, so that a display direction of a live wallpaper on a lock screen page can be the same as a display direction (a current system direction) of a home screen, and an always on display direction can be the same as the display direction of the live wallpaper on the lock screen page. This can conform to visual inertia of a user. In addition, when the live wallpaper is a super wallpaper theme, animations of home screen display, lock screen display, and the always on display of the electronic device can be further associatively displayed, which further improves use experience of the user.

Terms used in the following embodiments are merely intended to describe particular embodiments, but are not intended to limit this application. The singular expression "one", "alan", "said", "the foregoing", "the" and "this" as used in this specification and the appended claims of this application are also intended to include expressions such as "one or more", unless otherwise specified in the context clearly. It should be further understood that, in the following embodiments of this application, "at least one" or "one or more" means one, two, or more. The term "and/or" is used to describe an association relationship between associated objects and represents that three relationships may exist. For example, A and/or B may represent the following three cases: Only A exists, both A and B exist, and only B exists, where A and B may be singular or plural. The character "/" generally indicates an "or" relationship between the associated objects.

Reference to "an embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments", that appear at different places in this specification do not necessarily mean referring to a same embodiment, instead, they mean "one or more but not all of the embodiments", unless otherwise specifically emphasized. The terms "include", "contain", "have", and their variants all mean "include but are not limited to", unless otherwise specifically emphasized.

To better understand the solutions in this application, the following first describes related terms in embodiments of this application.

1. Home screen display, lock screen display, and always on display of an electronic device

When a user performs a lock screen operation on the electronic device when the electronic device is in an application screen or a main screen, a display of the electronic device sequentially presents pictures of the home screen display, the lock screen display, and the always on display. A lock screen application and a screen-off application of the electronic device are bound together. To be specific, when the lock screen operation is performed on the electronic device, the display of the electronic device automatically enters an always on display page after displaying a lock screen picture.

Similarly, when the user performs an unlocking operation on the electronic device when the electronic device is in an always on display state or a screen-off state, the display of the electronic device sequentially presents pictures of the always on display, the lock screen display (which may also be considered as unlocking display), and the home screen display. The lock screen application and the screen-off application of the electronic device are bound together. To be specific, when the unlocking operation is performed on the electronic device, the display of the electronic device automatically enters a lock screen display page after displaying a screen-off picture.

### 2. Super wallpaper

The super wallpaper indicates streamlining always on display, lock screen display, and home screen display, which have been independent from each other when a display of an electronic device is turned on or off, into a whole, and sharing one wallpaper theme, to achieve associative effect of the always on display, the lock screen display, and the home screen display for display pictures. A lock screen page displays animation of a super wallpaper theme. For example, in the conventional technology, real models such as Mars and Earth are reconstructed, and the models are made into live wallpapers. In addition, after a dark mode is enabled, the reconstructed models also enter a night mode. When the super wallpaper made based on the foregoing description is applied to the electronic device, the home screen display, the lock screen display, and the always on display of the electronic device can jointly present the foregoing models completely and coherently, and the lock screen page presents the live wallpaper that is made based on the foregoing models. Therefore, the application of the super wallpaper can make lock screen and unlocking experience of the electronic device more consistent with visual inertia of a user, thereby enhancing use experience of the user.

It should be noted that the electronic device described in embodiments of this application is any electronic device, for example, a device like a smartphone, a tablet computer, or a smartwatch, that has a display and that can perform the lock screen or unlocking operation.

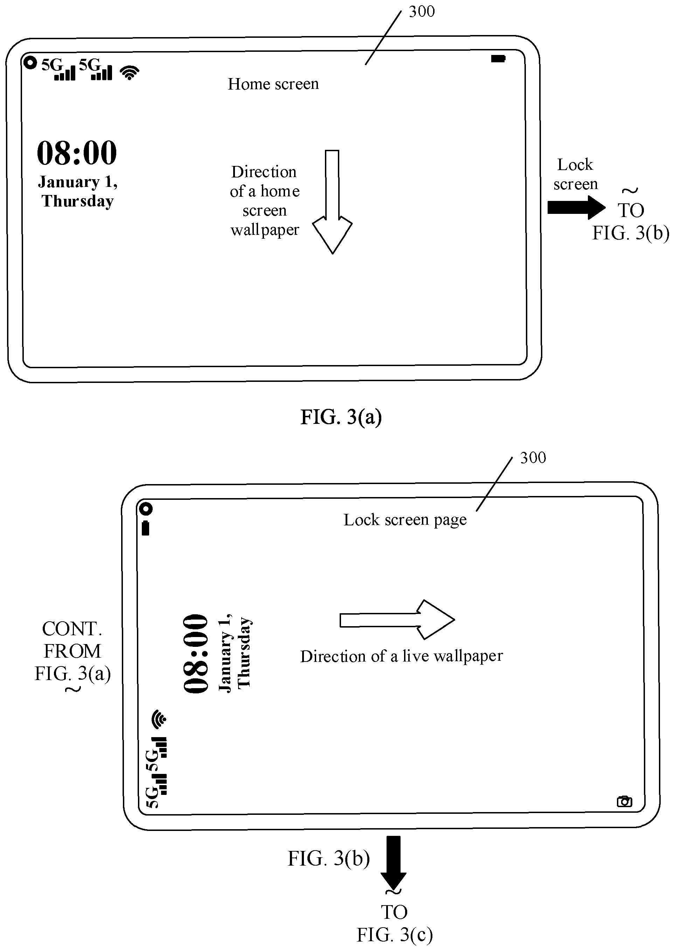

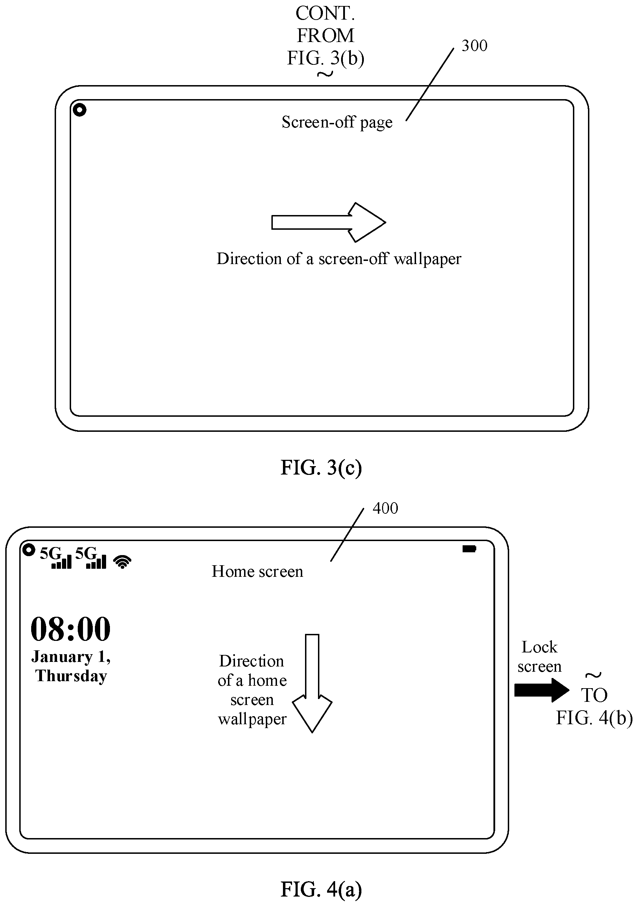

For example, FIG. 3(a), FIG. 3(b), and FIG. 3(c) are a diagram of an interface for displaying a live wallpaper in the conventional technology according to an embodiment of this application.

As shown in FIG. 3(a), FIG. 3(b), and FIG. 3(c), an electronic device 300 uses a live wallpaper theme, and the electronic device 300 is in a landscape mode (that is, a current system direction is a landscape orientation). A direction of a home screen wallpaper is consistent with the current system direction, that is, a landscape orientation. When a user performs a lock screen operation on the electronic device 300, a display interface of the electronic device 300 changes from home screen display (as shown in FIG. 3(a)) to lock screen display (as shown in FIG. 3(b)). In this case, a lock screen page displays a live wallpaper, and a display direction of live wallpaper animation on the lock screen page is a portrait orientation that is different from the current system direction. After the live wallpaper display on the lock screen page ends, the display interface of the electronic device 300 changes from the lock screen display (as shown in FIG. 3(b)) to always on display (as shown in FIG. 3(c)). However, a direction of a screen-off wallpaper displayed on a screen-off page is also the portrait orientation that is different from the current system direction.

Therefore, when the electronic device (for example, a tablet computer or a foldable screen device) is in a landscape orientation state or an unfolded-state display state, and the live wallpaper theme is used, the landscape orientation of the lock screen page and the screen-off page of the electronic device cannot be implemented in the conventional technology. Further, a display direction cannot be adaptively adjusted based on the current system direction. As a result, when a screen of the electronic device is locked, an abrupt display direction change between the home screen display and the lock screen display may bring poor visual experience to the user. In addition, when the live wallpaper theme is a super wallpaper theme, super wallpaper theme pictures may be split, and visual continuity of the user is damaged. Therefore, when the electronic device uses the super wallpaper theme, associative effect of the home screen display, the lock screen display, and the always on display of the electronic device cannot be achieved, and use experience of the user is affected.

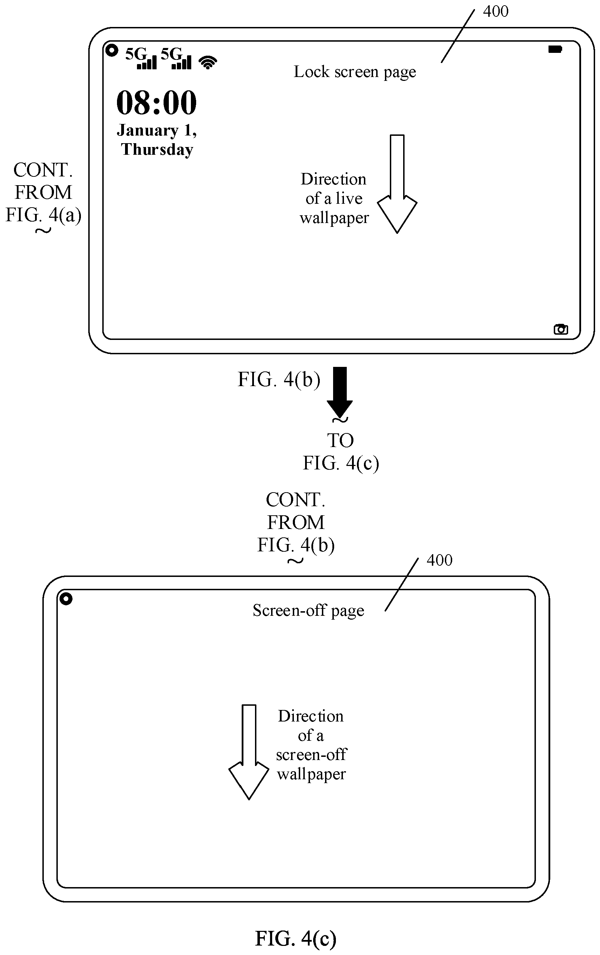

For example, for the foregoing technical problem, FIG. 4(a), FIG. 4(b), and FIG. 4(c) are a diagram of an interface for displaying a live wallpaper according to an embodiment of this application.

As shown in FIG. 4(a), FIG. 4(b), and FIG. 4(c), an electronic device 400 uses a live wallpaper theme, and the electronic device 400 is in a landscape mode (that is, a current system direction is a landscape orientation). A direction of a home screen wallpaper is consistent with the current system direction, that is, a landscape orientation. When a user performs a lock screen operation on the electronic device 400, a display interface of the electronic device 400 changes from home screen display (as shown in FIG. 4(a)) to lock screen display (as shown in FIG. 4(b)). In this case, a lock screen page displays a live wallpaper, and a display direction of live wallpaper animation on the lock screen page is consistent with the current system direction, and is also the landscape orientation. After the live wallpaper display on the lock screen page ends, the display interface of the electronic device 400 changes from the lock screen display (as shown in FIG. 4(b)) to always on display (as shown in FIG. 4(c)). A direction of a screen-off wallpaper displayed on a screen-off page is also consistent with the current system direction, that is, the landscape orientation.

In other words, in the solutions according to embodiments of this application, when the user performs the lock screen operation on the electronic device, the direction of the live wallpaper displayed on the lock screen display page, the direction of the home screen wallpaper before the screen is locked, and the direction of the screen-off wallpaper displayed on the screen-off page are all consistent with the current system direction. This conforms to visual inertia of the user and has visual continuity.

It should be understood that the current system direction described in embodiments of this application is not a fixed direction, but changes with a current device posture of the electronic device.

Similarly, in another live wallpaper display scenario, the electronic device 400 uses the live wallpaper theme, and the electronic device 400 is in a portrait mode (that is, the current system direction is a portrait orientation). The display direction of the home screen wallpaper is consistent with the current system direction, and is the portrait orientation. When the user performs the lock screen operation on the electronic device 400, both the direction of the live wallpaper displayed on the lock screen page and the direction of the screen-off wallpaper displayed on the screen-off page are consistent with the current system direction, that is a portrait orientation.

Optionally, the screen of the electronic device 400 may be locked in any one of the following operation manners: touching a power button, tapping a lock screen button in a shortcut button area in a swipe-down notification panel, setting a fixed period to perform automatic screen lock, and performing the lock screen operation according to a voice lock screen instruction. In addition, the lock screen operation may be performed in another manner. This is not limited in this application.

It should be understood that whether a display status of the electronic device in embodiments of this application is in the portrait orientation or the landscape orientation is determined based on the current device posture of the electronic device. For example, when an included angle between a near-ground side of the electronic device and a horizontal plane is less than or equal to 45°, and the near-ground side is a short side, the electronic device performs display in the portrait orientation. When the included angle between the near-ground side of the electronic device and the horizontal plane is less than or equal to 45°, and the near-ground side is a long side, the electronic device performs display in the landscape orientation. In addition, there may be another determining manner. This is not limited in this application.

It should be understood that embodiments of this application are merely example description provided for better understanding of the solutions of this application, and constitute no limitation on this application in any form.

In embodiments of this application, when the electronic device uses the live wallpaper, the live wallpaper and the screen-off page wallpaper can be displayed in different directions of a display, so that both an always on display direction and a lock screen display direction are consistent with the current system direction. When a screen-off operation is performed on the electronic device system, the lock screen page plays a live wallpaper picture based on the current system direction, and the screen-off page also performs always on display based on the current system direction. This can conform to the visual inertia of the user. In addition, when the live wallpaper is a super wallpaper theme, animations of the home screen display, the lock screen display, and the always on display of the electronic device can be further associatively displayed, which further improves use experience of the user.

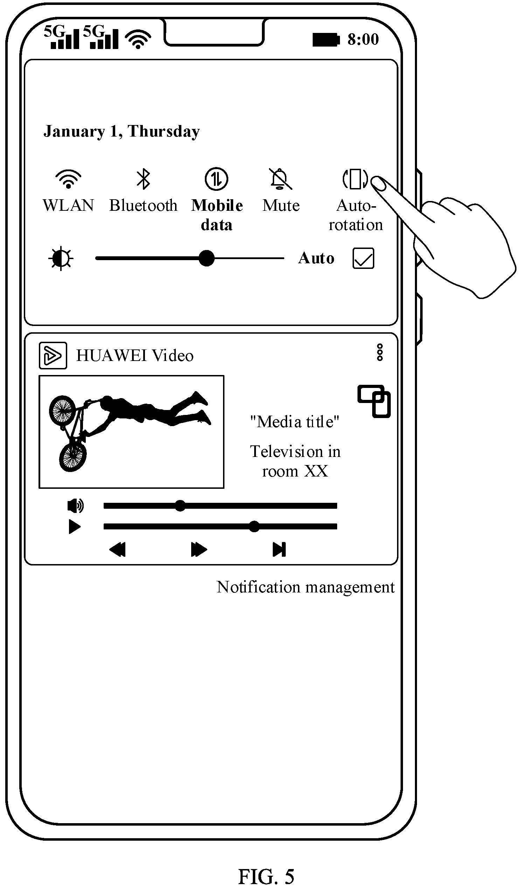

Optionally, for example, FIG. 5 is a diagram of an interface on which a user sets a rotation enabling function according to an embodiment of this application. As shown in FIG. 5, an example in which an electronic device is a mobile phone is used. The user may enable a screen rotation function of the electronic device by tapping an auto-rotation icon on a notification panel of the mobile phone.

Optionally, it may also be described as: The electronic device first receives a user setting operation; and enables a first function in response to the setting operation. The first function includes a function of changing a display direction of a live wallpaper with rotation of a body of the electronic device.

The user setting operation may be enabling a screen auto-rotation function on the notification panel of the electronic device; may be disabling a screen direction locking function on the notification panel of the electronic device; or may be another operation that can enable the first function. This is not limited in this application.

In embodiments of this application, an option is provided for the user whether to enable a wallpaper direction change function, so that the user can flexibly determine, based on a requirement of the user, whether the function needs to be applied, thereby avoiding troubles caused to the user when the user does not need to use the function, and improving use experience of the user.

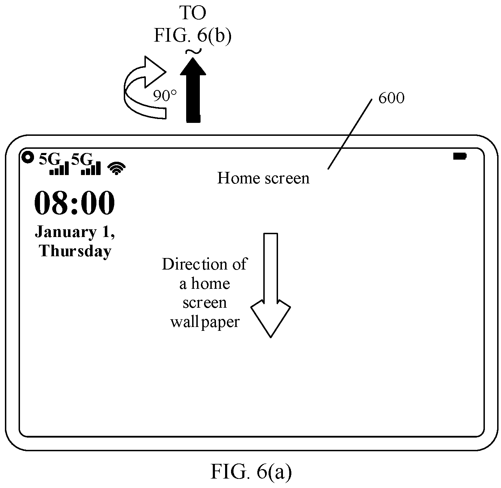

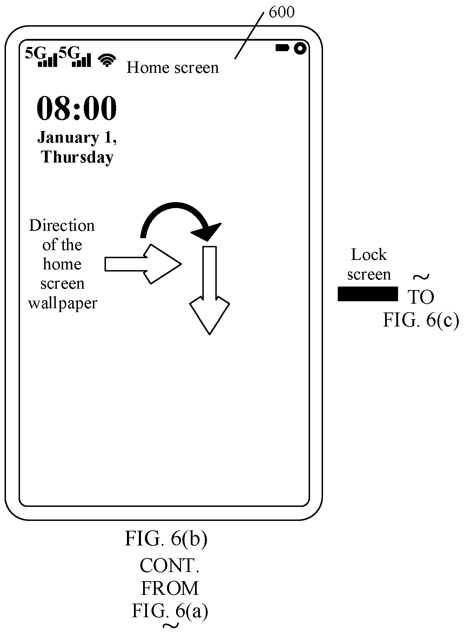

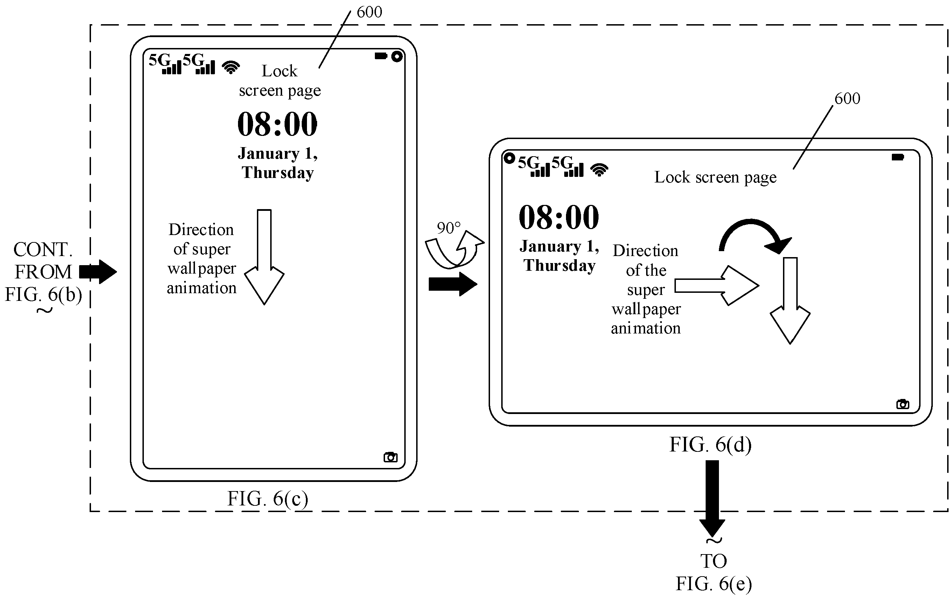

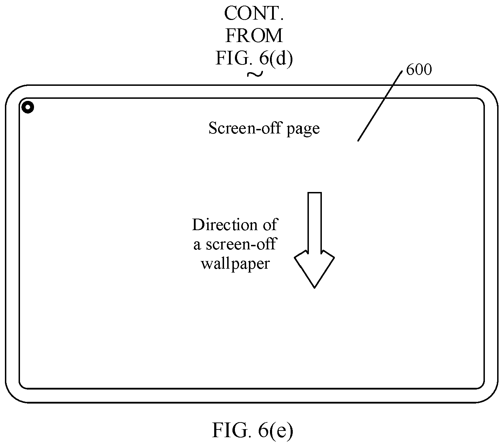

The following uses an example in which a live wallpaper theme is a super wallpaper theme. For example, FIG. 6(a), FIG. 6(b), FIG. 6(c), FIG. 6(d), and FIG. 6(e) are a diagram of an interface for displaying a super wallpaper theme according to an embodiment of this application.

As shown in FIG. 6(a), FIG. 6(b), FIG. 6(c), FIG. 6(d), and FIG. 6(e), an electronic device 600 uses the super wallpaper theme, and the electronic device 600 is in a landscape mode (that is, a current system direction is a landscape orientation). A direction of a home screen wallpaper is consistent with the current system direction (as shown in FIG. 6(a)), that is, a landscape orientation. When a user switches the current system direction of the electronic device 600 to a portrait orientation by changing a device posture of the electronic device (for example, the user directly faces the electronic device 600, and rotates a screen of the electronic device 600 clockwise by 90°), the display direction of the home screen wallpaper of the electronic device 600 rotates from an original system direction to the current system direction (as shown in FIG. 6(b)). When the user continues to perform a lock screen operation on the electronic device 600, a display interface of the electronic device 600 changes from home screen display to lock screen display (as shown in FIG. 6(c)). In this case, a lock screen page displays super wallpaper animation, and a display direction of the super wallpaper animation on the lock screen page is consistent with the current system direction, and is the portrait orientation. When the user switches the current system direction of the electronic device 600 to the landscape orientation by changing the device posture of the electronic device (for example, the user directly faces the electronic device 600, and rotates the screen of the electronic device 600 counterclockwise by 90°) in a play process of the super wallpaper animation on the lock screen page, the displayed super wallpaper animation dynamically rotates from the original system direction (which herein refers to the portrait orientation) to the current system direction (which herein refers to the landscape orientation) (as shown in FIG. 6(d)). After the super wallpaper animation display on the lock screen page ends, the display interface of the electronic device 600 changes from the lock screen display to always on display (as shown in FIG. 6(e)). A direction of a screen-off wallpaper displayed on a screen-off page is also consistent with the current system direction, that is, the landscape orientation.

In embodiments of this application, after the electronic device uses the live wallpaper theme, in a lock screen process of the electronic device, when the current system direction of the electronic device changes in a play process of live wallpaper animation on the lock screen page, the played live wallpaper animation correspondingly and dynamically rotates from the original system direction (a system direction that does not change yet) to the current system direction, a display direction of the screen-off page that is immediately entered is also the same as the current system direction (a system direction obtained when the lock screen display ends) of the electronic device, and a display direction of a home screen also changes based on the change of the current system direction. In this way, even if the user changes the current system direction of the electronic device in the lock screen process, effect of playing the live wallpaper is not affected. When the live wallpaper is the super wallpaper theme, animations of the home screen display, the lock screen display, and the always on display of the electronic device can be associatively displayed, which further improves use experience of the user.

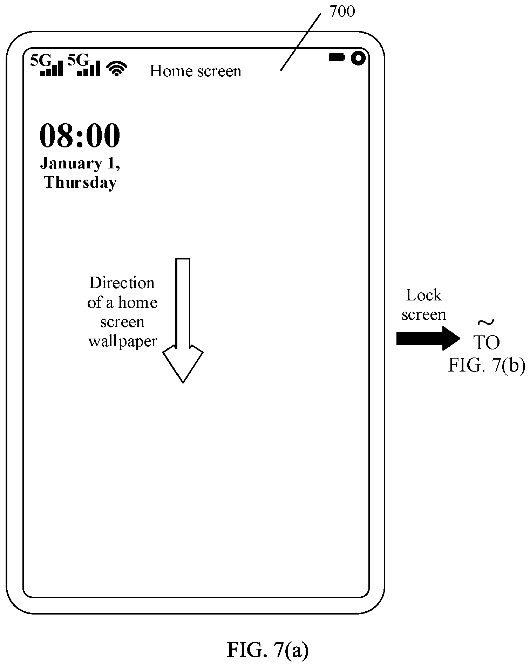

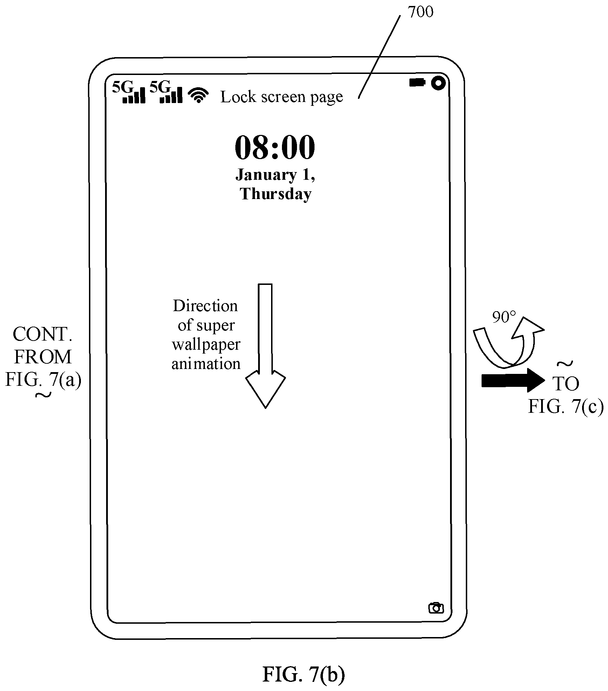

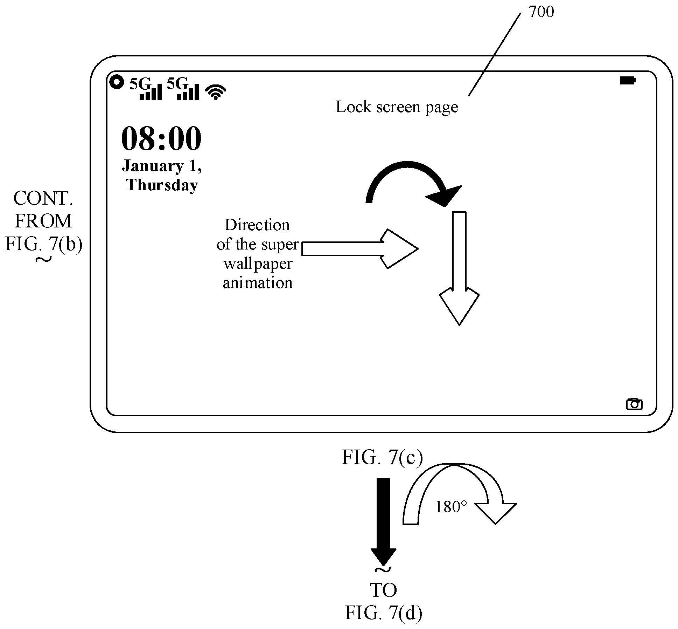

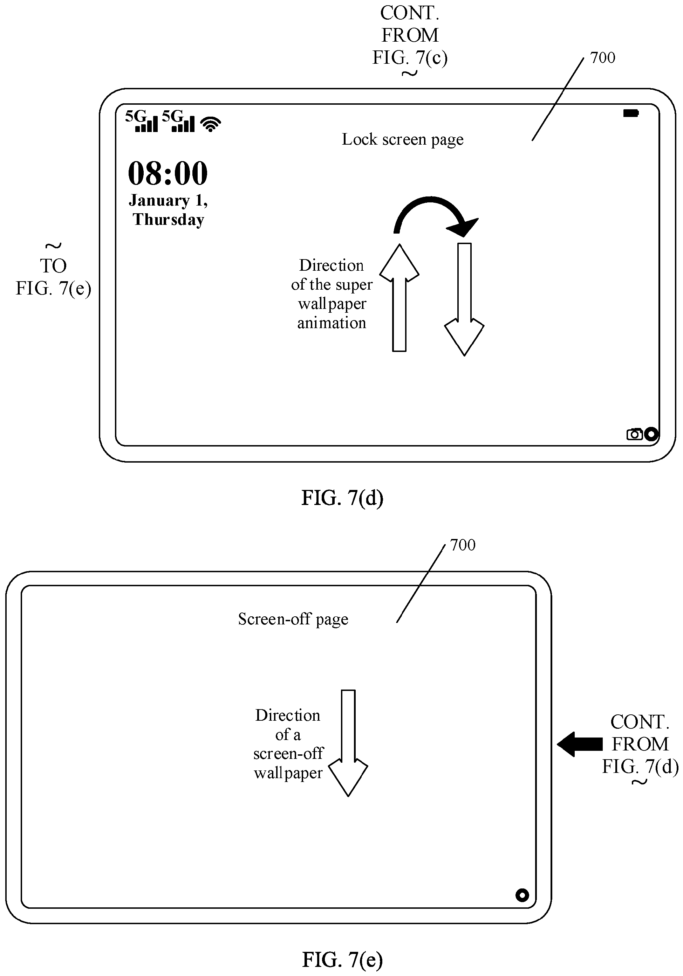

According to the embodiment shown in FIG. 6(a), FIG. 6(b), FIG. 6(c), FIG. 6(d), and FIG. 6(e), for example, FIG. 7(a), FIG. 7(b), FIG. 7(c), FIG. 7(d), and FIG. 7(e) are a diagram of still another interface for displaying a super wallpaper theme according to an embodiment of this application.

As shown in FIG. 7(a), FIG. 7(b), FIG. 7(c), FIG. 7(d), and FIG. 7(e), an electronic device 700 uses the super wallpaper theme, and the electronic device 700 is in a portrait mode (that is, a current system direction is a portrait orientation). A direction of a home screen wallpaper is consistent with the current system direction (as shown in FIG. 7(a)), that is, a portrait orientation. When a user performs a lock screen operation on the electronic device 700, a display interface of the electronic device 700 changes from home screen display to lock screen display (as shown in FIG. 7(b)). In this case, a lock screen page displays super wallpaper animation, and a display direction of the super wallpaper animation on the lock screen page is consistent with the current system direction, and is the portrait orientation. When the user switches the current system direction of the electronic device 700 to a landscape orientation by changing a device posture of the electronic device in a play process of the super wallpaper animation on the lock screen page (for example, the user directly faces the electronic device 700, and rotates a screen of the electronic device 700 counterclockwise by 90°), the displayed super wallpaper animation dynamically rotates from an original system direction (which herein refers to the portrait orientation) to the current system direction (which herein refers to the landscape orientation) (as shown in FIG. 7(c)). On this basis, when the user switches the current system direction of the electronic device 700 to a direction opposite to the direction shown in FIG. 7(c) by changing the device posture of the electronic device for another time (for example, the user directly faces the electronic device 700, and rotates the screen of the electronic device 700 clockwise by 180°), the displayed super wallpaper animation dynamically rotates from the original system direction (which herein refers to the direction shown in FIG. 7(c)) to the current system direction (which herein refers to the direction opposite to the direction shown in FIG. 7(c)) (as shown in FIG. 7(d)). After the super wallpaper animation display on the lock screen page ends, the display interface of the electronic device 700 changes from the lock screen display to always on display (as shown in FIG. 7(e)). A direction of a screen-off wallpaper displayed on a screen-off page is also consistent with the current system direction (which herein refers to the direction shown in FIG. 7(d)).

In embodiments of this application, after the electronic device uses a live wallpaper theme, in a lock screen process of the electronic device, when the current system direction of the electronic device changes in a play process of live wallpaper animation on the lock screen page, the played live wallpaper animation correspondingly and dynamically rotates from the original system direction (a system direction that does not change yet) to the current system direction, and a display direction of the screen-off page that is immediately entered is also the same as the current system direction (a system direction obtained when the lock screen display ends) of the electronic device. In this way, even if the user changes the current system direction of the electronic device in the lock screen process, effect of playing the live wallpaper is not affected. When the live wallpaper is the super wallpaper theme, animations of the home screen display, the lock screen display, and the always on display of the electronic device can be associatively displayed, which further improves use experience of the user.

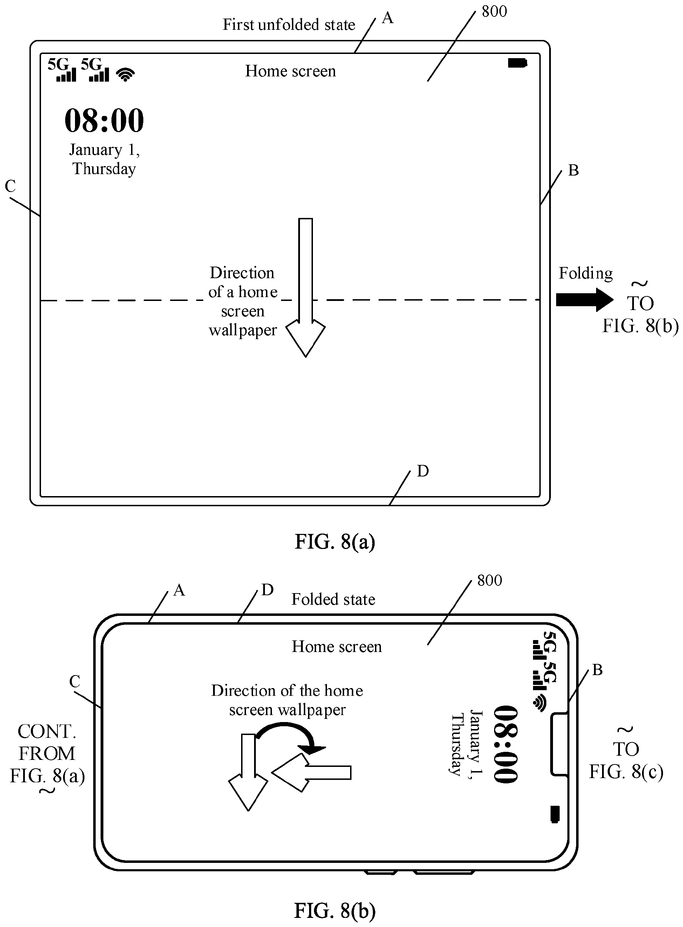

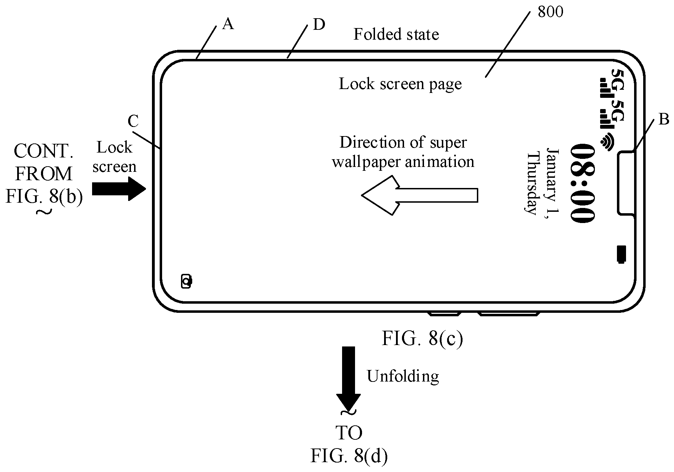

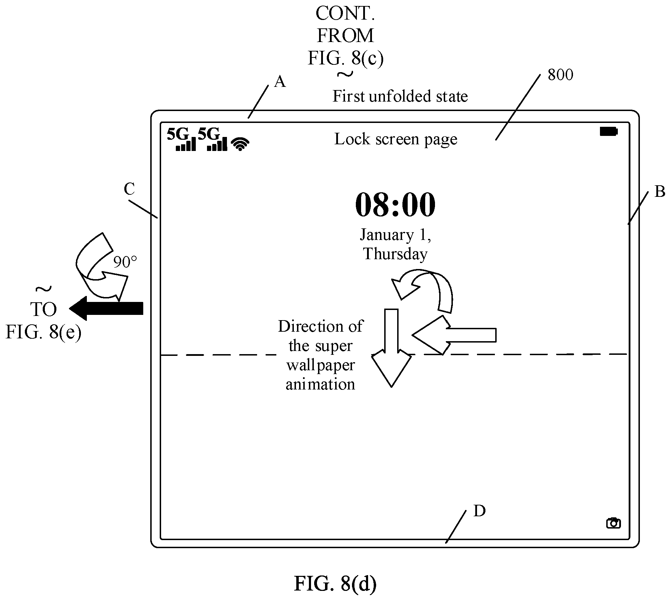

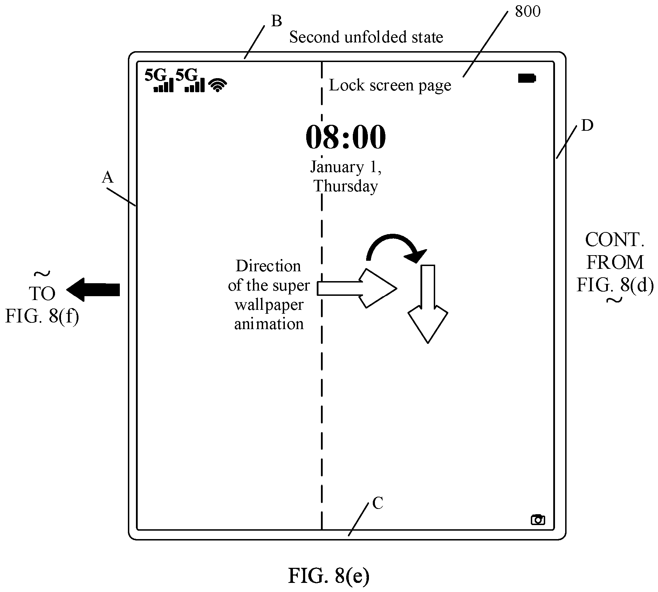

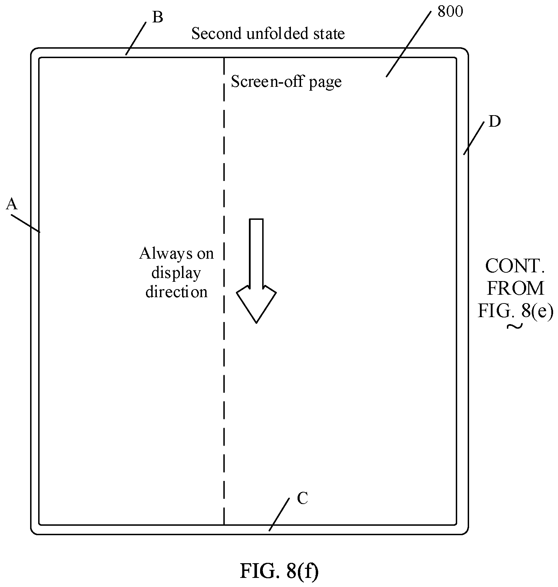

For example, FIG. 8(a), FIG. 8(b), FIG. 8(c), FIG. 8(d), FIG. 8(e), and FIG. 8(f) are a diagram of yet another interface for displaying a super wallpaper theme according to an embodiment of this application.

As shown in FIG. 8(a), FIG. 8(b), FIG. 8(c), FIG. 8(d), FIG. 8(e), and FIG. 8(f), the electronic device is a foldable screen device 800. The foldable screen device 800 has two states: a folded state and an unfolded state. The unfolded state of the foldable screen device 800 is divided into a first unfolded state and a second unfolded state. Screen display directions in the first unfolded state and the second unfolded state are perpendicular to each other.

The foldable screen device 800 uses the super wallpaper theme, and the foldable screen device 800 is in the first unfolded state. A current system direction is a direction that is from a side A to a side D and that is perpendicular to the side A, and a direction of a home screen wallpaper is consistent with the current system direction (as shown in FIG. 8(a)). When a user performs a folding operation on the foldable screen device 800, to enable the state of the foldable screen device 800 to switch from the first unfolded state to the folded state, the current system direction does not change, but the display direction of the home screen of the foldable screen device 800 changes to a direction that is from a side B to a side C and that is perpendicular to the side B (as shown in FIG. 8(b)). When the user continues to perform a lock screen operation on the foldable screen device 800, a display interface of the foldable screen device 800 changes to lock screen display (as shown in FIG. 8(c)). In this case, a lock screen page displays super wallpaper animation, and a display direction of the super wallpaper animation on the lock screen page is the direction that is from the side B to the side C and that is perpendicular to the side B. When the user switches the state of the foldable screen device 800 from the folded state to the first unfolded state in a play process of the super wallpaper animation on the lock screen page, the displayed super wallpaper animation dynamically rotates from an original system direction (which herein refers to the direction that is from the side B to the side C and that is perpendicular to the side B) to the current system direction (which herein refers to the direction that is from the side A to the side D and that is perpendicular to the side A) (as shown in FIG. 8(d)). On this basis, when the user switches, by changing a device posture of the foldable screen device (for example, the user directly faces the foldable screen device 800, and rotates a screen of the foldable screen device 800 counterclockwise by 90°), the current system direction of the foldable screen device 800 to the direction that is from the side B to the side C and that is perpendicular to the side B, the displayed super wallpaper animation dynamically rotates from the original system direction (which herein refers to the direction that is from the side A to the side D and that is perpendicular to the side A) to the current system direction (which herein refers to the direction that is from the side B to the side C and that is perpendicular to the side B) (as shown in FIG. 8(e)). After the super wallpaper animation display on the lock screen page ends, the display interface of the foldable screen device 800 changes from the lock screen display to always on display (as shown in FIG. 8(f)). A direction of a screen-off wallpaper displayed on a screen-off page is also consistent with the current system direction (which herein refers to the direction that is from the side B to the side C and that is perpendicular to the side B).

It should be understood that the unfolded state of the foldable screen device may further be specifically classified into a fully unfolded state and a partially unfolded state. In addition, when the foldable screen device is in the partially unfolded state, a display status of the screen of the foldable screen device may be the same as an actual status of the fully unfolded state, or may be the same as an actual status of the folded state.

In embodiments of this application, when the electronic device is the foldable screen device, the foldable screen device can determine, based on whether the foldable screen device is in the unfolded state, whether a live wallpaper and the screen-off wallpaper need to be displayed based on the system direction. When the foldable screen device is in the unfolded state, by default, the live wallpaper and the screen-off wallpaper need to be displayed based on the system direction. This can meet different requirements of the user when the user uses the foldable screen device in different statuses, and can further improve use experience of the user.

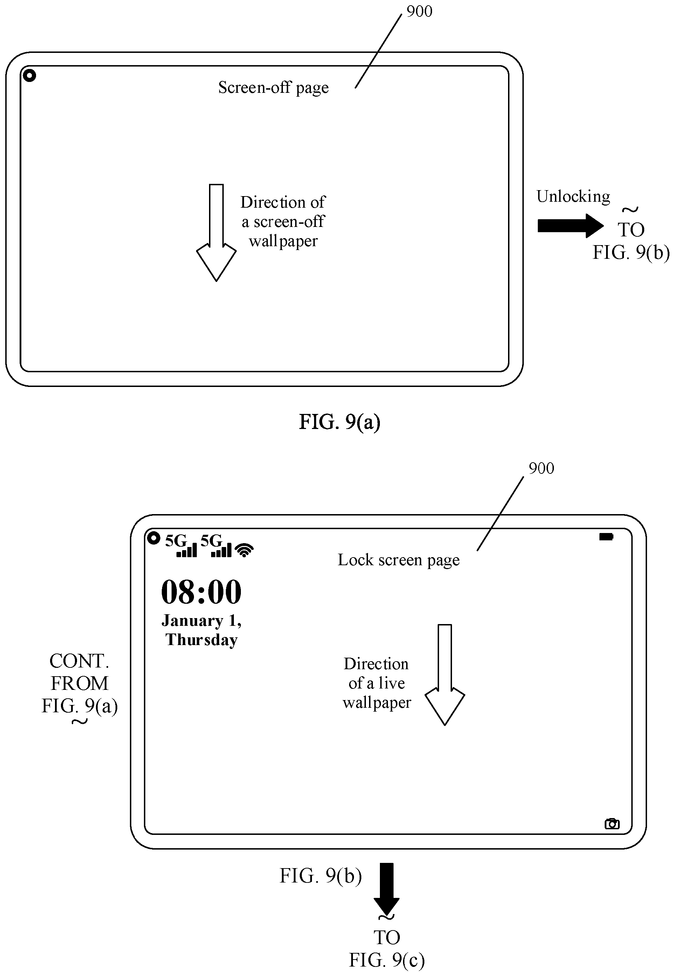

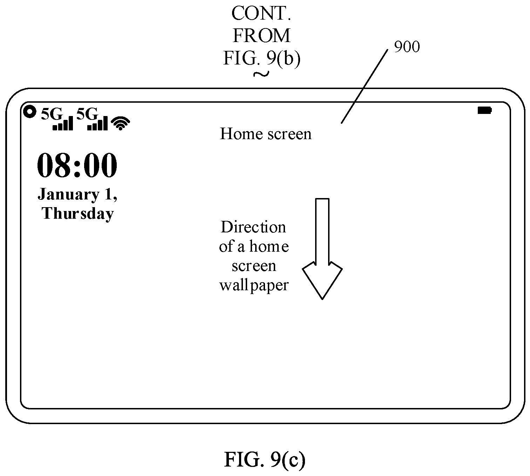

In parallel with the embodiment shown in FIG. 4(a), FIG. 4(b), and FIG. 4(c), for example, FIG. 9(a), FIG. 9(b), and FIG. 9(c) are a diagram of still another interface for displaying a live wallpaper according to an embodiment of this application.

As shown in FIG. 9(a), FIG. 9(b), and FIG. 9(c), an electronic device 900 uses a live wallpaper theme, and the electronic device 900 is in a landscape mode (that is, a current system direction is in a landscape orientation). A display interface of the electronic device is on an always on display page. A display direction of a screen-off wallpaper is the same as the current system direction, and is in the landscape orientation (as shown in FIG. 9(a)). When a user performs an unlocking operation on the electronic device 900 when the current system direction does not change, the display interface of the electronic device 900 changes from always on display to lock screen display (as shown in FIG. 9(b)), and a direction of the live wallpaper displayed on a lock screen page is the same as the current system direction, that is, the landscape orientation, and is the same as the direction of the screen-off wallpaper displayed on the screen-off page before unlocking. After the live wallpaper display on the lock screen page ends, the display interface of the electronic device 900 changes from the lock screen display to home screen display (as shown in FIG. 9(c)), and a direction of a home screen wallpaper displayed on a home screen is also consistent with the current system direction, that is, the landscape orientation, and is the same as the direction of the live wallpaper displayed on the lock screen page.

Optionally, the electronic device 900 may be unlocked in any one of the following operation manners: touching a power button, recognizing a fingerprint, recognizing a face, inputting a password, recognizing a gesture, or performing the unlocking operation according to a voice unlocking instruction. In addition, the unlocking operation may be performed in another manner. This is not limited in this application.

Similarly, in another live wallpaper display scenario, the electronic device 900 uses the live wallpaper theme, and the electronic device 900 is in a portrait mode (that is, the current system direction is a portrait orientation). The display interface of the electronic device 900 is on the always on display page, and the display direction of the screen-off wallpaper is consistent with the current system direction, and is the portrait orientation. When the user performs the unlocking operation on the electronic device 900 when the current system direction does not change, both a direction of live wallpaper animation displayed on the lock screen page and a direction of the screen-off wallpaper displayed on the home screen are consistent with the current system direction, that is, a portrait orientation.

In embodiments of this application, the electronic device uses the live wallpaper. When the display interface of the electronic device is on the screen-off page, and the current system direction of the electronic device is the same as the display direction of the screen-off page, the user performs the screen unlocking operation on the electronic device when the current system direction does not change, and the display interface of the electronic device sequentially displays the screen-off wallpaper, a lock screen wallpaper (the live wallpaper), and the home screen wallpaper. In addition, display directions of the screen-off wallpaper, the lock screen wallpaper, and the home screen wallpaper are the same as the current system direction, and can conform to visual inertia of the user. In addition, when the live wallpaper is the super wallpaper theme, animations of the home screen display, the lock screen display, and the always on display of the electronic device can be further associatively displayed, which further improves use experience of the user.

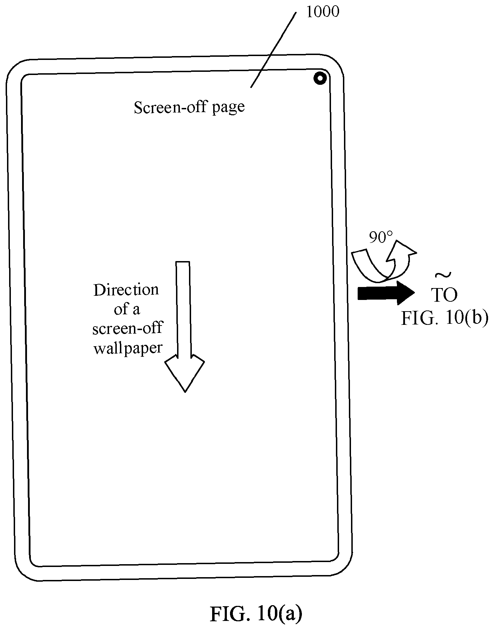

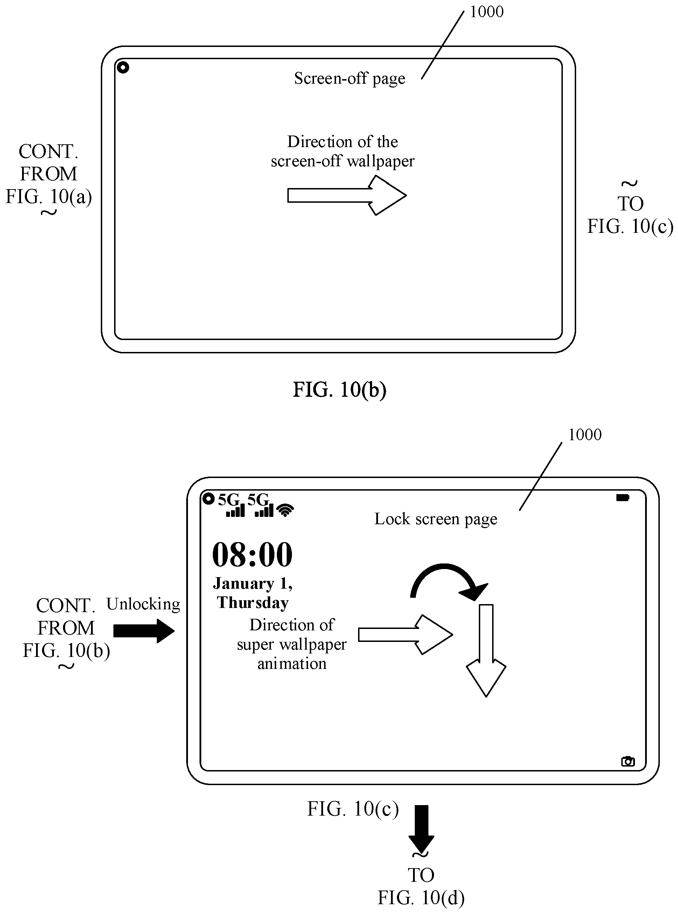

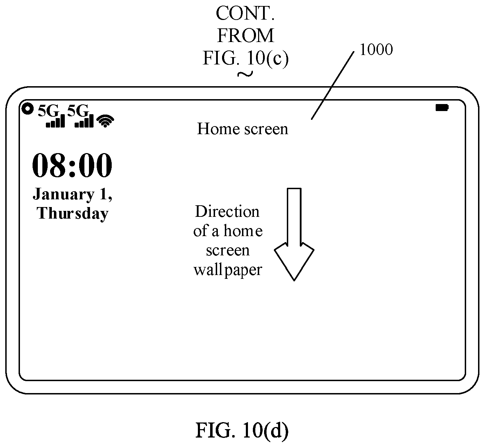

An example in which a live wallpaper theme is a super wallpaper theme is used. For example, FIG. 10(a), FIG. 10(b), FIG. 10(c), and FIG. 10(d) are a diagram of still another interface for displaying a super wallpaper according to an embodiment of this application.

As shown in FIG. 10(a), FIG. 10(b), FIG. 10(c), and FIG. 10(d), an electronic device 1000 uses a super wallpaper theme, and the electronic device 1000 is in a portrait mode. To be specific, a current system direction of the electronic device 1000 is a portrait orientation, and a display interface of the electronic device 1000 is on a screen-off page. A direction of a screen-off wallpaper displayed on the screen-off page is consistent with the current system direction, that is, a portrait orientation (as shown in FIG. 10(a)). On this basis, a user enables, by rotating the electronic device 1000, the current system direction of the electronic device 1000 to switch from the portrait orientation to a landscape orientation. In this case, the display interface of the electronic device 1000 is still on the screen-off page, and the direction of the screen-off wallpaper displayed on the screen-off page does not change relative to a display of the electronic device. The screen-off wallpaper is still displayed in the portrait orientation, and the display direction of the screen-off wallpaper does not change with the current system direction (as shown in FIG. 10(b)). In this case, the user performs an unlocking operation on the electronic device 1000, and the display interface of the electronic device 1000 changes from always on display (as shown in FIG. 10(b)) to lock screen display (which may also be considered as unlocking display, as shown in FIG. 10(c)). In this process, the user may see that there is a process of a direction, of super wallpaper animation displayed on the lock screen page, dynamically rotating from the portrait orientation to the landscape orientation, so that the screen-off wallpaper displayed on the screen-off page and the super wallpaper animation displayed on the lock screen page can be visually in continuity with each other. After the super wallpaper display on the lock screen page ends, the display interface of the electronic device 1000 changes from the lock screen display (as shown in FIG. 10(c)) to home screen display (as shown in FIG. 10(d)). A direction of a home screen wallpaper displayed on a home screen is the same as the current system direction, that is, is the same as a direction obtained when the super wallpaper display on the lock screen page ends, that is, the landscape orientation.

It should be understood that when the electronic device is in a screen-off state, the direction of the screen-off wallpaper displayed on the screen-off page does not change with the current system direction of the electronic device.

In embodiments of this application, the electronic device uses the super wallpaper. When a display interface of the electronic device is on the screen-off page, and the current system direction of the electronic device is different from the display direction of the screen-off page, the user performs a screen unlocking operation on the electronic device, and the display interface of the electronic device sequentially displays the screen-off wallpaper, a lock screen wallpaper (the super wallpaper animation), and the home screen wallpaper. There is a process of the direction, of the super wallpaper displayed on the lock screen page, dynamically rotating from an original system direction (the display direction of the screen-off page) to the current system direction, so that the screen-off wallpaper displayed on the screen-off page and the super wallpaper animation displayed on the lock screen page can be visually in continuity with each other, and the direction of the home screen wallpaper displayed on the home screen is the same as the direction (the current system direction) obtained when the super wallpaper display on the lock screen page ends. In this way, when the screen of the electronic device is unlocked, even if a direction of an always on display wallpaper is inconsistent with the current system direction, animations of the always on display, the lock screen display, and the home screen display of the electronic device can be associatively displayed, which further improves use experience of the user.

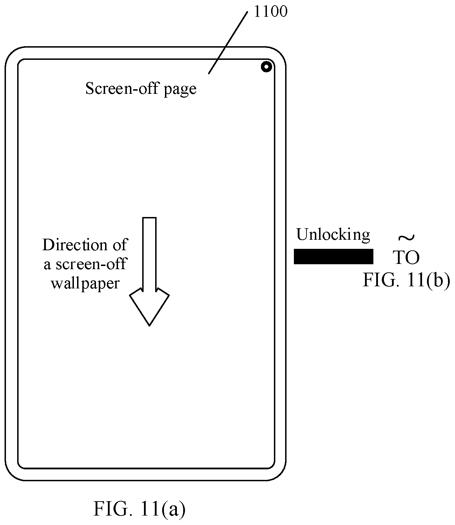

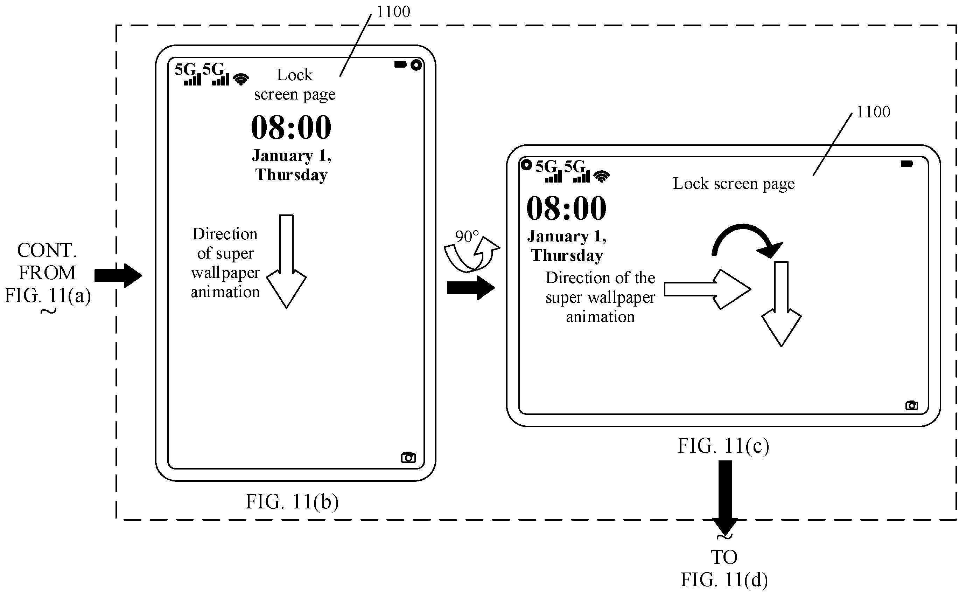

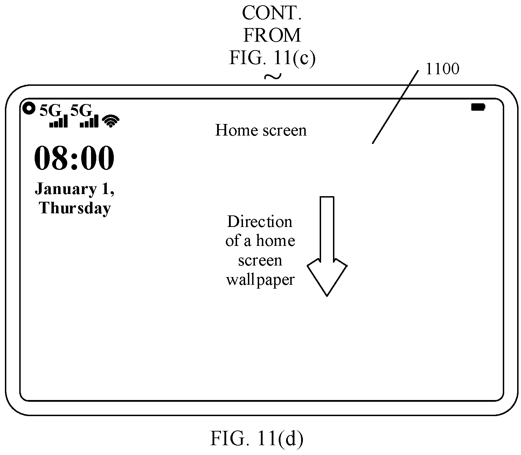

An example in which a live wallpaper theme is a super wallpaper theme is used. For example, FIG. 11(a), FIG. 11(b), FIG. 11(c), and FIG. 11(d) are a diagram of still another interface for displaying a super wallpaper theme according to an embodiment of this application.

As shown in FIG. 11(a), FIG. 11(b), FIG. 11(c), and FIG. 11(d), an electronic device 1100 uses the super wallpaper theme, and the electronic device 1100 is in a portrait mode (that is, a current system direction is a portrait orientation). An always on display direction is consistent with the current system direction (as shown in FIG. 11(a)), that is, a portrait orientation. When a user performs an unlocking operation on the electronic device 1100, a display interface of the electronic device 1100 changes from always on display to lock screen display (as shown in FIG. 11(b)). In this case, a lock screen page displays super wallpaper animation, and a display direction of the super wallpaper animation on the lock screen page is consistent with the current system direction, and is the portrait orientation. When the user switches the current system direction of the electronic device 1100 to a landscape orientation by changing a device posture of the electronic device (for example, the user directly faces the electronic device 1100, and rotates a screen of the electronic device 1100 counterclockwise by 90°) in a play process of the super wallpaper animation on the lock screen page, the displayed super wallpaper animation dynamically rotates from an original system direction (which herein refers to the portrait orientation) to the current system direction (which herein refers to the landscape orientation) (as shown in FIG. 11(c)). After the super wallpaper animation display on the lock screen page ends, the display interface of the electronic device 1100 changes from the lock screen display to home screen display (as shown in FIG. 11(d)). A direction of a screen-off wallpaper displayed on a screen-off page is also consistent with the current system direction, that is, the landscape orientation.

In embodiments of this application, after the electronic device uses a live wallpaper theme, in an unlocking process of the electronic device, when the current system direction of the electronic device changes in a play process of live wallpaper animation on the lock screen page, the played live wallpaper animation correspondingly and dynamically rotates from the original system direction (a system direction that does not change yet) to the current system direction, and a display direction of a home screen that is immediately entered is also the same as the current system direction (a system direction obtained when the lock screen display ends) of the electronic device. In this way, even if the user changes the current system direction of the electronic device in the unlocking process, effect of playing the live wallpaper is not affected. When the live wallpaper is the super wallpaper theme, animations of the home screen display, the lock screen display, and the always on display of the electronic device can be associatively displayed, which further improves use experience of the user.

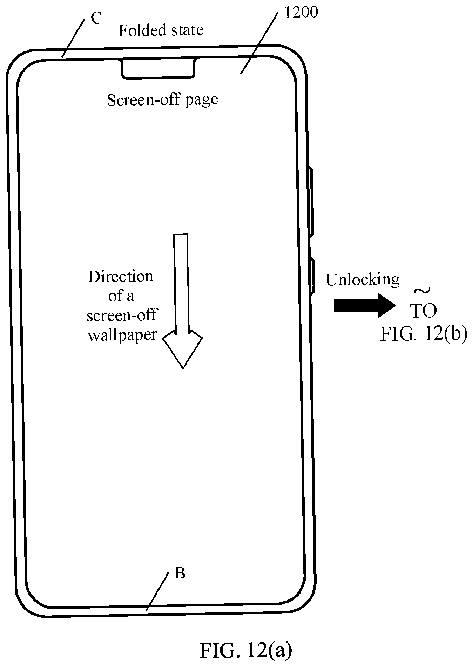

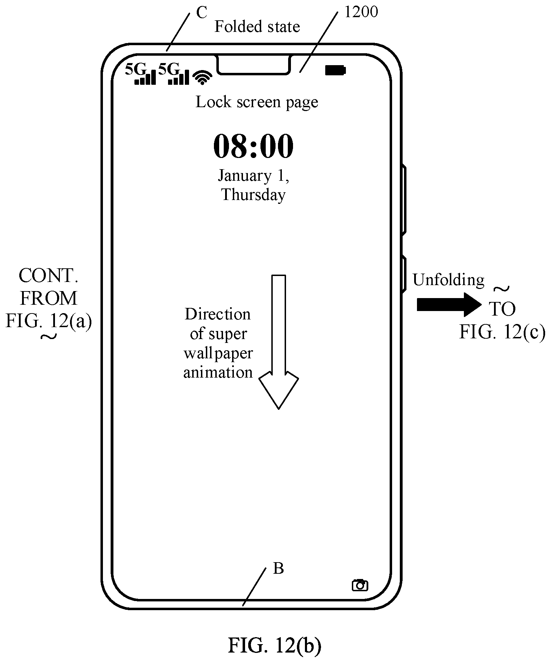

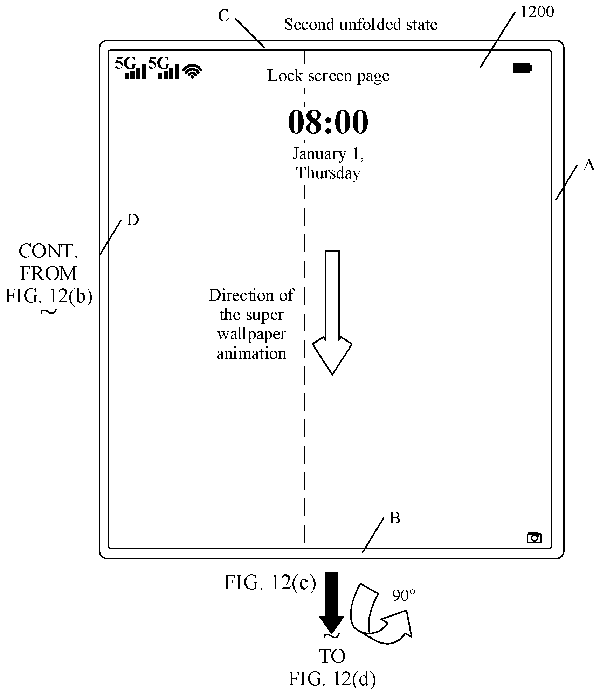

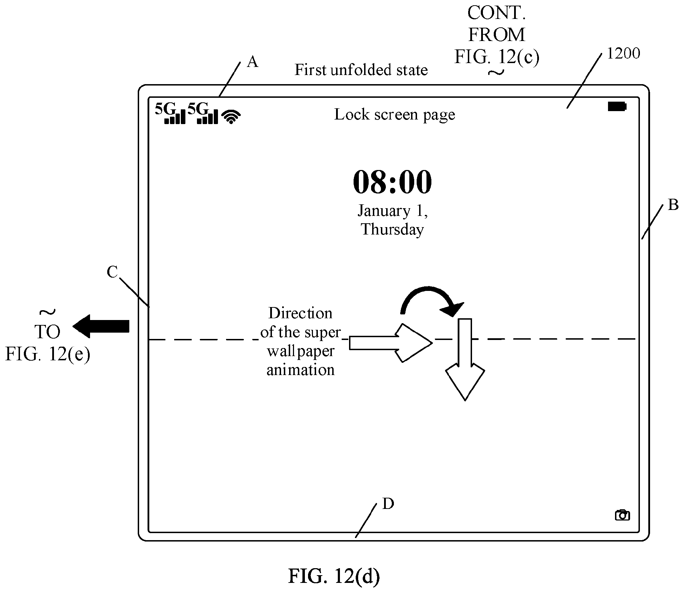

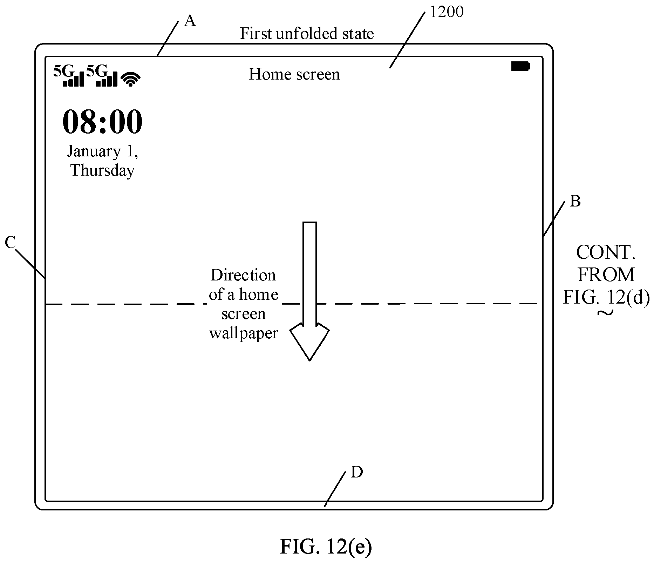

For example, FIG. 12(a), FIG. 12(b), FIG. 12(c), FIG. 12(d), and FIG. 12(e) are a diagram of yet another interface for displaying a super wallpaper theme according to an embodiment of this application.

As shown in FIG. 12(a), FIG. 12(b), FIG. 12(c), FIG. 12(d), and FIG. 12(e), the electronic device is a foldable screen device 1200. The foldable screen device 1200 has two states: a folded state and an unfolded state. The unfolded state of the foldable screen device 1200 is divided into a first unfolded state and a second unfolded state. Screen display directions in the first unfolded state and the second unfolded state are perpendicular to each other.

The foldable screen device 1200 uses the super wallpaper theme, and the foldable screen device 1200 is in the folded state. A current system direction is a direction that is from a side C to a side B and that is perpendicular to the side C, and an always on display direction is consistent with the current system direction (as shown in FIG. 12(a)). When a user performs an unlocking operation on the foldable screen device 1200, a display interface of the foldable screen device 1200 changes to lock screen display (as shown in FIG. 12(b)). In this case, a lock screen page displays super wallpaper animation, and a display direction of the super wallpaper animation on the lock screen page is the direction that is from the side C to the side B and that is perpendicular to the side C. When the user performs an unfolding operation on the foldable screen device 1200 in a play process of the super wallpaper animation on the lock screen page, to enable the state of the foldable screen device 1200 to switch from the folded state to the second unfolded state, the current system direction does not change, and the display direction of the super wallpaper animation on the lock screen page is still the same as the current system direction, and is the direction that is from the side C to the side B and that is perpendicular to the side C (as shown in FIG. 12(c)). On this basis, when the user switches, by changing a device posture of the foldable screen device (for example, the user directly faces the foldable screen device 1200, and rotates a screen of the foldable screen device 1200 counterclockwise by 90°), the current system direction of the foldable screen device 1200 to a direction that is from the side A to a side D and that is perpendicular to the side A, the displayed super wallpaper animation dynamically rotates from an original system direction (which herein refers to the direction that is from the side C to the side B and that is perpendicular to the side C) to the current system direction (which herein refers to the direction that is from the side A to the side D and that is perpendicular to the side A) (as shown in FIG. 12(d)). After the super wallpaper animation display on the lock screen page ends, the display interface of the foldable screen device 1200 changes from the lock screen display to home screen display (as shown in FIG. 12(e)). A direction of a home screen wallpaper displayed on a home screen is also consistent with the current system direction (which herein refers to the direction that is from the side A to the side D and that is perpendicular to the side A).

It should be understood that the unfolded state of the foldable screen device may further be specifically classified into a fully unfolded state and a partially unfolded state. In addition, when the foldable screen device is in the partially unfolded state, a display status of the screen of the foldable screen device may be the same as an actual status of the fully unfolded state, or may be the same as an actual status of the folded state.

In embodiments of this application, when the electronic device is the foldable screen device, the foldable screen device can determine, based on whether the foldable screen device is in the unfolded state, whether a live wallpaper and a screen-off wallpaper need to be displayed based on the system direction. When the foldable screen device is in the unfolded state, by default, the live wallpaper and the screen-off wallpaper need to be displayed based on the system direction. This can meet different requirements of the user when the user uses the foldable screen device in different statuses, and can further improve use experience of the user.

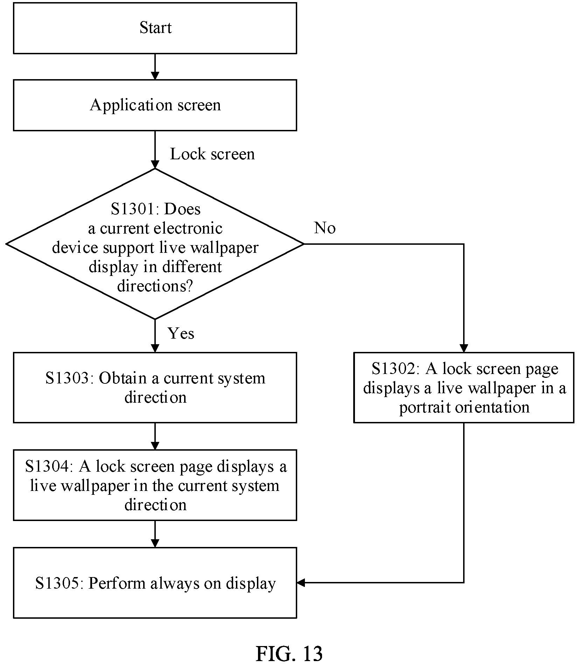

To better understand the super wallpaper display control method according to embodiments of this application, for example, FIG. 13 is a schematic flowchart of a live wallpaper display control method 1300 according to an embodiment of this application. As shown in FIG. 13, the method is applied to an electronic device, the current electronic device uses a live wallpaper theme, and a screen of the electronic device is on an application screen. The method 1300 includes the following steps.

Step S1301: After a user triggers a lock screen function of the electronic device, the electronic device determines whether the current electronic device supports live wallpaper display in different directions. If no, step S1302 is performed; or if yes, step S1303 is performed.

The operation of triggering the lock screen function of the electronic device may also be referred to as a screen-off operation on the electronic device.

Optionally, step S1301 may be replaced with: After the user triggers the lock screen function of the electronic device, the electronic device determines whether the current screen needs to display a live wallpaper based on a current system direction. If no, step S1302 is performed; or if yes, step S1303 is performed. Step S1301 may be further replaced with: After the user triggers the lock screen function of the electronic device, determine whether a display of the current electronic device is a large display. If no, step S1302 is performed; or if yes, step S1303 is performed.

Step S 1302: A lock screen page displays the live wallpaper in a portrait orientation.

When the electronic device does not support the live wallpaper display in different directions, it is considered by default that the electronic device supports the live wallpaper display only in the portrait orientation. Correspondingly, the lock screen page displays the live wallpaper in the portrait orientation.

Step S1303: Obtain the current system direction.

The current system direction is a system direction in which the electronic device is currently located. The current system direction is relative to the display of the electronic device, and may be specifically classified into the portrait orientation and a landscape orientation. More specifically, the portrait orientation may be classified into two opposite directions, and the landscape orientation may also be divided into two opposite directions.

For example, when an included angle between a near-ground side of the electronic device and a horizontal plane is less than or equal to 45°, and the near-ground side is a short side, the electronic device is in a portrait orientation, the current system direction is the portrait orientation, and a positive direction of a picture displayed on the display is perpendicular to the near-ground side and upward. When an included angle between a near-ground side of the electronic device and a horizontal plane is less than or equal to 45°, and the near-ground side is a long side, the electronic device is in the landscape orientation, the current system direction is the landscape orientation, and a positive direction of a picture displayed on the display is perpendicular to the near-ground side and upward. In addition, there may be another determining manner. This is not limited in this application.

Optionally, the current system direction is determined by using a current device posture of the electronic device, and specifically, may be obtained by using a posture sensor in the electronic device. The posture sensor may include a gyroscope sensor or a triaxial acceleration sensor, and may further include another sensor. This is not limited in this application.

For example, the electronic device is a foldable phone. Based on a natural coordinate system of the phone, system directions of the foldable phone are: an x-axis positive direction, an x-axis negative direction, a y-axis positive direction, and a y-axis negative direction.

Step S1304: The lock screen page displays the live wallpaper in the current system direction.

For example, the electronic device is the foldable phone. For example, the current system direction of the electronic device is the x-axis positive direction, that is, a home screen is in the landscape orientation. In this case, the user performs the screen-off operation on the electronic device, and the lock screen page of the electronic device displays the live wallpaper in the x-axis positive direction.

Step S1305: The display of the electronic device enters a screen-off page.

After it is determined that the electronic device supports the live wallpaper display in different directions, when an application is in always on display, the electronic device stores display locations and display resources in different system directions. In a screen-off process, the electronic device can implement the always on display in the current system direction based on the stored display location and display resource.

Optionally, the always on display may be implemented by using a display controller in the electronic device.

Optionally, the live wallpaper theme may be a super wallpaper theme.

It should be understood that step S1301 in embodiments of this application is an optional step.

In embodiments of this application, for a problem that the live wallpaper theme can only be displayed in a portrait orientation and cannot be displayed in different system directions of the electronic device in the conventional technology, the live wallpaper display control method in which the live wallpaper theme can be displayed in different directions of the electronic device based on the system direction is proposed. When the screen of the electronic device is turned off, a lock screen application displays the live wallpaper based on the current system direction, and the screen-off page can implement the always on display in different system directions based on the stored display locations and display resources, so that visual experience of the user can be improved. In addition, when the live wallpaper is the super wallpaper theme, home screen display, lock screen display, and the always on display can end up achieving live wallpaper animation effects associatively in different system directions of the electronic device, which further improves use experience of the user.

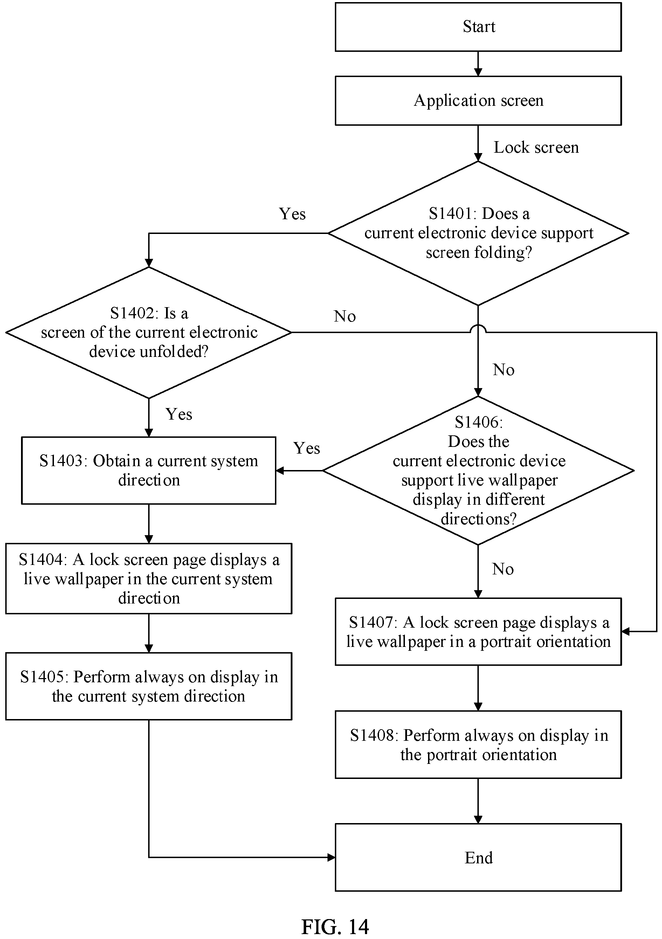

According to the embodiment shown in FIG. 13, FIG. 14 is a schematic flowchart of another live wallpaper display control method 1400 according to an embodiment of this application. As shown in FIG. 14, the method is applied to an electronic device, the current electronic device uses a live wallpaper theme, and a screen of the electronic device is on an application screen. The method 1400 includes the following steps.

Step S1401: When the electronic device receives a lock screen notification, determine whether the electronic device supports screen folding. If yes, step S1402 is performed; or if no, step S1406 is performed.

Whether the electronic device supports screen folding is determined by a structure and performance of the electronic device.

Step S1402: When it is determined that the electronic device supports screen folding, further determine whether the screen of the electronic device is in an unfolded state. If yes, step S1403 is performed; or if no, step S1407 is performed.

The unfolded state of the screen of the electronic device may include a fully unfolded state and/or a partially unfolded state. The fully unfolded state means that two half screens folded over each other are located on a same plane, and there is an included angle of 180° between the two half screens. The partially unfolded state may mean that the included angle between the two half screens is less than 180°, or may mean that the included angle between the two half screens is greater than or equal to 90° and less than 180°.

Step S1403: Obtain a current system direction of the electronic device.

Explanation of the current system direction of the electronic device is described in detail in step S1303. For brevity, details are not described herein again.

Step S1404: A lock screen page of the electronic device displays a live wallpaper in the current system direction.

It should be understood that if the current system direction of the electronic device changes in a process in which the lock screen page of the electronic device displays the live wallpaper, a direction of the displayed live wallpaper is also correspondingly switched from an original system direction to the current system direction through dynamic rotation.

Step S1405: A screen-off page of the electronic device is in always on display in the current system direction.

It should be understood that the always on display in the current system direction described in this step is different from that described in step S1404. When playing of the live wallpaper on the lock screen page of the electronic device is completed, the screen of the electronic device is switched to the always on display. In this case, an always on display direction is the same as a direction obtained when the playing of the live wallpaper ends, so that the live wallpaper displayed on the lock screen page and the always on display are visually in continuity with each other. In addition, after a display interface of the electronic device is switched to the always on display, the always on display direction does not change with a change of the current system direction of the electronic device.

Step S1406: When it is determined that the current electronic device does not support screen folding, further determine whether the electronic device supports super wallpaper display in different directions. If yes, step S1403 is performed; or if no, step S1407 is performed.

Explanation of step S1406 has been described in detail in step S1301. For brevity, details are not described herein again.

Step S1407: The lock screen page displays the live wallpaper in a portrait orientation.

When it is determined that the electronic device does not support live wallpaper display in different directions, it is considered by default that the electronic device supports the live wallpaper display only in the portrait orientation. Correspondingly, the lock screen page displays the live wallpaper in the portrait orientation.

Step S1408: The electronic device performs always on display in the portrait orientation.

In embodiments of this application, when the screen of the electronic device is locked, whether the electronic device is a foldable screen device is first determined. When the electronic device is the foldable screen device and the screen of the electronic device is in the unfolded state, lock screen display and always on display are performed based on the current system direction of the electronic device. When the electronic device is not the foldable screen device, whether the electronic device supports the live wallpaper display in different directions is further determined. When the electronic device supports the live wallpaper display in different directions, lock screen display and always on display are performed based on the current system direction of the electronic device. In this way, visual experience of a user can be improved. In addition, when the live wallpaper is a super wallpaper theme, home screen display, the lock screen display, and the always on display can end up achieving live wallpaper animation effects associatively in different system directions of the electronic device, which further improves use experience of the user.

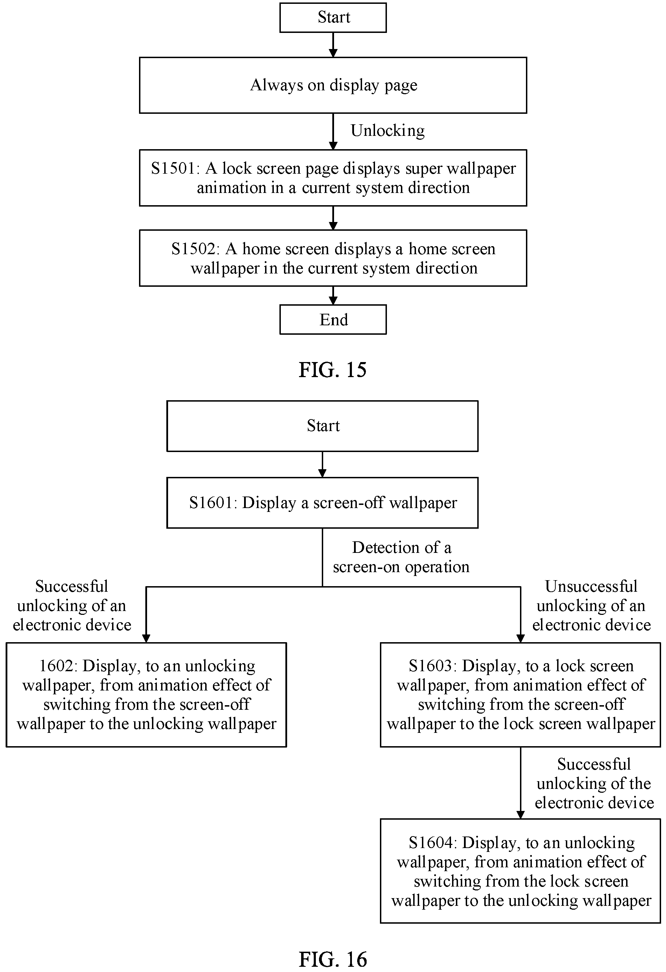

According to the embodiment shown in FIG. 8(a), FIG. 8(b), FIG. 8(c), FIG. 8(d), FIG. 8(e), and FIG. 8(f), that a live wallpaper is a super wallpaper is used as an example. FIG. 15 is a schematic flowchart of a super wallpaper display control method 1500 according to an embodiment of this application. As shown in FIG. 15, the method is applied to an electronic device, the current electronic device uses a super wallpaper theme, and a screen of the electronic device is on an always on display page. The method 1500 includes the following steps.

Step S1501: After a user triggers a screen unlocking function of the electronic device, screen display of the current electronic device changes from the always on display page to a lock screen display page, and the lock screen page displays super wallpaper animation in a current system direction.

For example, the electronic device is a foldable phone. Based on a natural coordinate system of the phone, system directions of the foldable phone are: an x-axis positive direction, an x-axis negative direction, a y-axis positive direction, and a y-axis negative direction. The current system direction of the electronic device is the x-axis positive direction, and a direction of screen-off page display is the y-axis positive direction. When the user unlocks the electronic device, the super wallpaper animation displayed on the lock screen page dynamically rotates from the y-axis positive direction to the x-axis positive direction in a display process, to ensure associative display effect of the screen-off page display and lock screen page display.

For another example, the electronic device is a foldable phone. Based on a natural coordinate system of the phone, system directions of the foldable phone are: an x-axis positive direction, an x-axis negative direction, a y-axis positive direction, and a y-axis negative direction. The current system direction of the electronic device is the x-axis positive direction, and a direction of screen-off page display is also the x-axis positive direction. When the user unlocks the electronic device, a direction of the super wallpaper animation displayed on the lock screen page is the x-axis positive direction, to implement associative display effect of the screen-off page display and lock screen page display.

Step S1502: A home screen displays a home screen wallpaper in the current system direction.

It should be understood that the current system direction may change in a time period between screen locking and screen unlocking of the electronic device. However, when the current system direction changes, an always on display direction does not change accordingly, and directions of lock screen display and home screen display that sequentially appear after unlocking are consistent with the current system direction. Therefore, in this case, after the screen of the electronic device is unlocked, there is a process of the direction, of the super wallpaper animation displayed on the lock screen page, dynamically rotating from an original system direction (the always on display direction) to the current system direction, so that the super wallpaper animation displayed on the lock screen page and a screen-off wallpaper displayed on a screen-off page can be linked up, and visual continuity is provided.

In embodiments of this application, when the user unlocks the screen of the electronic device, directions of the unlocked lock screen page and the home screen display are consistent with the current system direction. In addition, when the current system direction is inconsistent with the always on display direction, there is the process of the direction, of the super wallpaper animation displayed on the lock screen page, dynamically rotating from the original system direction (the always on display direction) to the current system direction, so that associative display effect of the always on display, the lock screen display, and the home screen of the electronic device in the unlocking process can be achieved. In addition, when the super wallpaper animation is applied to the electronic device, the always on display, the lock screen display, and the home screen wallpaper of the electronic device are a complete set of themes. The associative display effect of the always on display, the lock screen display, and the home screen is of great significance for presentation of the super wallpaper theme, and use experience of the user can be further improved.

In parallel with the embodiment shown in FIG. 13, for example, FIG. 16 shows still another live wallpaper display method according to an embodiment of this application. The method is applied to an electronic device, and the electronic device uses a live wallpaper theme. As shown in FIG. 16, the method includes the following steps.

Step S1601: Display a screen-off wallpaper.

Step S1602: When a screen-on operation is detected, in response to successful unlocking of the electronic device, display, to an unlocking wallpaper, from animation effect of switching from the screen-off wallpaper to the unlocking wallpaper.

The unlocking wallpaper may also be referred to as a home screen wallpaper, and the screen-off wallpaper may also be considered as always on display.

Optionally, the screen-on operation may be an unlocking operation.

Optionally, that display directions of the animation effect and the unlocking wallpaper can change with rotation of a body of the electronic device includes: if a body direction of the electronic device rotates from a vertical direction or a partially vertical direction to a horizontal direction or a partially horizontal direction, changing the display directions of the animation effect and the unlocking wallpaper from a portrait orientation to a landscape orientation.

Step S1603: When a screen-on operation is detected, in response to unsuccessful unlocking of the electronic device, display, to a lock screen wallpaper, from animation effect of switching from the screen-off wallpaper to the lock screen wallpaper.

In other words, if the electronic device fails to be unlocked, in this case, because the unlocking operation is performed, the screen of the electronic device is turned on, displays the animation effect of switching from the screen-off wallpaper to the lock screen wallpaper, and ends up as a lock screen page after display of the animation effect is completed.

The case in which the electronic device fails to be unlocked may be a case in which a fingerprint does not match, facial recognition fails, an unlocking control is incorrectly pressed, or the like. This is not limited in this application.

Optionally, that display directions of the animation effect and the lock screen wallpaper can change with rotation of a body of the electronic device includes: if a body direction of the electronic device rotates from a vertical direction or a partially vertical direction to a horizontal direction or a partially horizontal direction, changing the display directions of the animation effect and the lock screen wallpaper from a portrait orientation to a landscape orientation.

Step S1604: When the screen-on operation is detected and the electronic device is on the lock screen page, in response to successful unlocking of the electronic device, display, to the unlocking wallpaper, from animation effect of switching from the lock screen wallpaper to the unlocking wallpaper.

In embodiments of this application, the unlocking operation is performed on the electronic device when the screen-off wallpaper is displayed. Even if the unlocking fails, the animation effect of switching from the screen-off wallpaper to the lock screen wallpaper is displayed, and the screen ends up as a lock screen wallpaper display page. In addition, regardless of whether the unlocking succeeds after one attempt or after a plurality of attempts, wallpaper display corresponding to the electronic device has good visual continuity. In this way, a user can obtain good visual experience.

In the conventional technology, there are dynamic styles in always on display of an electronic device. Display resources of these dynamic styles are implemented after frames of pictures are combined for display. Because there are a large quantity of frames, a large quantity of display resources need to be stored. To avoid an efficiency problem caused by picture decoding and storage of a display resource in a corresponding direction when a screen of the electronic device is turned off, the display resources of the dynamic styles are stored when a live wallpaper theme is used, and a group of live display resources need to be stored in each system direction. Therefore, to implement always on display of the electronic device in four system directions, display resources in the four system directions need to be stored. As a result, large storage space is occupied.

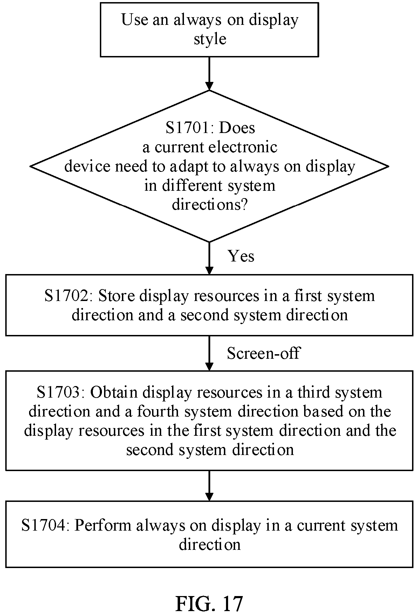

For this problem, according to the embodiment shown in FIG. 13, for example, FIG. 17 is a schematic flowchart of an always on display control method 1700 according to an embodiment of this application. The method 1700 can implement always on display in four system directions by using display resources in two system directions. As shown in FIG. 17, the method 1700 includes the following steps.

Step S1701: Determine whether a current electronic device needs to adapt to always on display in different directions. If yes, step S1702 is performed.

When an always on display style is used to the electronic device, it is determined whether the electronic device needs to adapt to the always on display in different system directions.

Optionally, whether the always on display in different directions needs to be adapted may be further determined by determining whether the current electronic device supports super wallpaper display in different directions. If the current electronic device supports the super wallpaper display in different directions, it is determined that the electronic device needs to adapt to the always on display in different directions. It may be further determined whether a current screen needs to display a super wallpaper based on a current system direction. If yes, it is determined that the electronic device needs to adapt to the always on display in different directions. Alternatively, it may be determined whether a display of the current electronic device is a large display. If yes, it is determined that the electronic device needs to adapt to the always on display in different directions.

It should be understood that step S1701 is an optional step.

Step S1702: Store display resources in a first direction and a second direction.

The first direction and the second direction are two of the four system directions of the electronic device. The first direction and the second direction are perpendicular to each other and are at an included angle of 90°, and respectively represent a landscape orientation and a portrait orientation of the electronic device.

For example, the electronic device is a foldable phone. Based on a natural coordinate system of the phone, system directions of the foldable phone are: an x-axis positive direction, an x-axis negative direction, a y-axis positive direction, and a y-axis negative direction. The first direction and the second direction may be the x-axis positive direction and the y-axis positive direction respectively.

Optionally, a display resource in the first direction includes a bitmap (bitmap) resource in the first direction, and may further include another display resource. This is not limited in this application.

Similarly, a display resource in the second direction includes a bitmap resource in the second direction, and may further include another display resource. This is not limited in this application.

Step S1703: When a user performs a screen-off operation on the electronic device, the electronic device obtains display resources in a third direction and a fourth direction based on the display resources in the first direction and the second direction.

The third direction and the first direction are positive and negative directions of each other, and the fourth direction and the second direction are positive and negative directions of each other.

For example, the electronic device is a foldable phone. Based on a natural coordinate system of the phone, system directions of the foldable phone are: an x-axis positive direction, an x-axis negative direction, a y-axis positive direction, and a y-axis negative direction. The first direction and the second direction may be the x-axis positive direction and the y-axis positive direction respectively. Correspondingly, the third direction and the fourth direction are the x-axis negative direction and the y-axis negative direction respectively.

Optionally, a display resource in the third direction includes a bitmap resource in the third direction, and may further include another display resource. This is not limited in this application.

Similarly, a display resource in the fourth direction includes a bitmap resource in the fourth direction, and may further include another display resource. This is not limited in this application.

Specifically, the electronic device performs byte reversal on the display resources (for example, the bitmap resources) in the first direction and the second direction, to obtain the display resources in the third direction and the fourth direction, thereby implementing always on display in different system directions.

Optionally, the bitmap is stored in AGRB_4444 and RGB565 formats, two bytes represent one pixel, and bitmap reversal is implemented by reversing a byte sequence (that is, reordering bytes).

Step S1704: Perform always on display in the current system direction.

The current system direction is determined by the electronic device based on a current device posture of the electronic device, and is one of the first direction to the fourth direction.

Optionally, the device posture of the electronic device may be represented by an orientation of the display on a body of the electronic device and an included angle between the body of the electronic device and the ground. For example, the display of the electronic device may face due south, and the body and the ground form an included angle of 45°.

In embodiments of this application, always on display in the four system directions of the electronic device can be implemented based on the current system direction, a display location in the current system direction, and display resources in two system directions, and the display resources corresponding to the four system directions do not need to be stored. The byte reversal only needs to be performed on display resources in two mutually perpendicular system directions, to implement the always on display in the four system directions, and reduce storage occupation of the electronic device. In addition, a byte rotation speed in embodiments of this application is far faster than a picture rotation speed used in the conventional technology, and display efficiency of the electronic device can be improved.

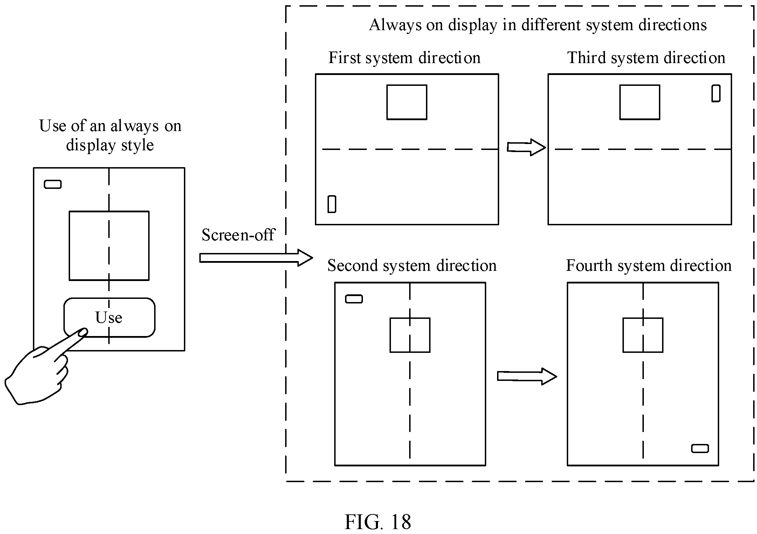

In correspondence with the embodiment shown in FIG. 17, FIG. 18 is a diagram of an always on display interface in different system directions according to an embodiment of this application. As shown in FIG. 18, when a user uses an always on display style on an electronic device, and the user performs a screen-off operation on the electronic device, the electronic device obtains display resources in a third system direction and a fourth system direction based on display resources in a first system direction and a second system direction. In this way, the display resources in the four system directions are obtained, and always on display in the four system directions is implemented.

The display resources in the first system direction and the second system direction are stored by the electronic device when the always on display style is used.

Descriptions of the first system direction to the fourth system direction have been described in detail in the embodiment shown in FIG. 16. For brevity, details are not described herein again.

For always on display in different directions, not only a displayed picture resource needs to be rotated, but also a display location needs to be rotated. Different layers have different rotation manners due to different relative locations.

It should be understood that a time display location on a display screen of the electronic device is a relative location in a base (base) diagram, and a display location of another picture is an absolute location on the screen.

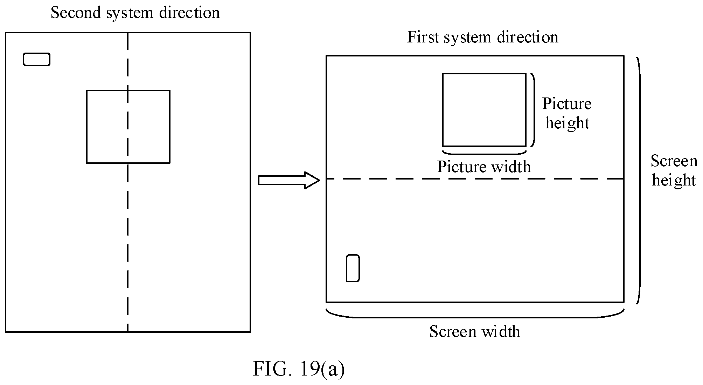

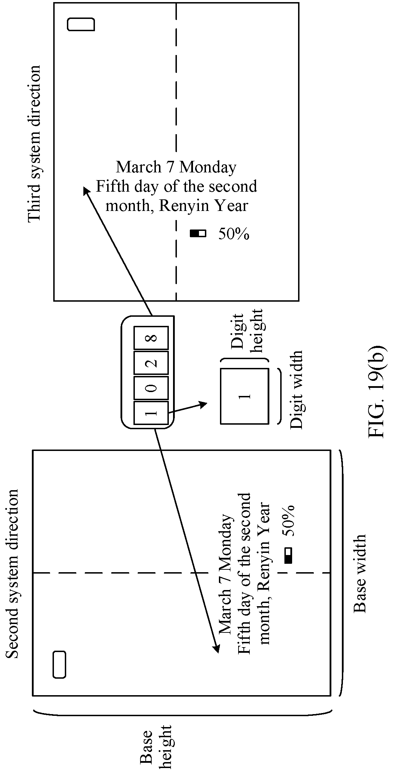

For example, with reference to FIG. 19(a) and FIG. 19(b), absolute location coordinate transformation and relative location coordinate transformation of an image displayed on the display screen of the electronic device are described.

FIG. 19(a) is a diagram of always on display (picture) when the screen of the electronic device rotates counterclockwise by 90°. A height and a width of the always on display picture in a current system direction are known, and a screen width and a screen height in a first direction are known. In this case, a coordinate location of current always on display can be calculated based on a current system direction coordinate system. A specific calculation process is as follows:

Always on display coordinates in an original system direction are denoted as (L, T, R, B), and always on display coordinates in the current system direction are denoted as (L1, T1, R1, B1).

Then, L1 = screen height - B; T2 = (screen width - picture width)/2; R1 = L + picture height; and B1 = T + picture width.

In this way, coordinates of an absolute location, on the screen, of a display location of the always on display picture can be transformed.

FIG. 19(b) is a diagram of always on display (time) when the screen of the electronic device rotates clockwise by 90°. A system direction is switched from the second direction to the third direction. A screen height (base height) and a screen width (base width) in the second direction are known, and a to-be-calculated width and height of a digit are known. In this case, a coordinate location, in the base diagram, of clock digits in current always on display can be calculated based on a current system direction coordinate system. A specific calculation process is as follows:

Always on display coordinates in an original system direction are denoted as (L2, T2, R2, B2), and always on display coordinates in the current system direction are denoted as (L3, T3, R3, B3).

Then, L3 = base height - T2 - digit height; T3 = base width -L2 -digit width (screen width - picture width); R3 = L2 + digit height; and B3 = T + digit width.

In this way, coordinates of the relative coordinate location, in the base diagram, of the clock digits in the always on display can be transformed.

In the conventional technology, in always on display in a single system direction, the always on display completes corresponding pixel shift for screen burn-in protection based on a fixed initial location, shift range, and shift distance, thereby avoiding a case in which a screen that is always on affects a service life of an electronic device. However, always on display, of the screen of the electronic device, in different system directions uses the fixed initial location, shift range, and shift distance, and cannot adapt to screen heights in different system directions.

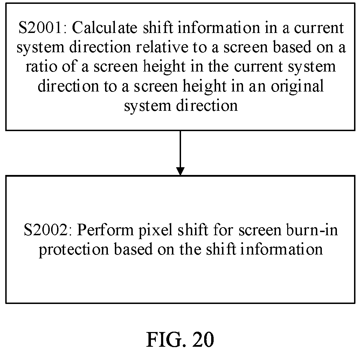

For this problem, for example, FIG. 20 is a schematic flowchart of another always on display control method 2000 according to an embodiment of this application. As shown in FIG. 20, the method 2000 includes the following steps.

Step S2001: Calculate shift information in a current system direction relative to a screen based on a ratio of a screen height in the current system direction to a screen height in an original system direction.

The shift information includes one or more of a top margin, a shift range, and a shift distance. In addition, the shift information may further include other information. This is not limited in this application.

For example, the system direction of an electronic device is switched from a landscape orientation to a portrait orientation, that is, the original system direction is the landscape orientation, and the current system direction is the portrait orientation. It is assumed that the screen height in the current system direction is 2, the screen height in the original system direction is 1, and the ratio of the screen height in the current system direction to the screen height in the original system direction is 2:1. A ratio of a top margin in the current system direction to a top margin in the original system direction is equal to 2:1, a ratio of a shift range in the current system direction to a shift range in the original system direction is equal to 2:1, and a ratio of a shift distance in the current system direction to a shift distance in the original system direction is equal to 2:1.

Optionally, when the electronic device is switched from the portrait orientation to the landscape orientation, the shift information may be calculated according to this formula: (fixed distance/portrait screen height)×current screen height. The fixed distance is associated with a screen size of the electronic device, and may be a value, or may be a value range.

Step S2002: Perform pixel shift for screen burn-in protection based on the shift information.

Screen burn-in means that after a screen displays a still image for long time, a ghost image of the image is left at a display location. This ghost image is permanent and cannot be eliminated, and usually appears on plasma televisions and mobile phones with organic light-emitting diode (organic light-emitting diode, OLED) screens. The pixel shift for screen burn-in protection refers to shift of an image displayed on a display, to prevent an image from being displayed in a same pixel or a same pixel area for long time, thereby implementing a screen burn-in protection function.

It should be understood that the shift information provides a shiftable area for pixel shift for screen burn-in protection of always on display of the electronic device, and always on display content adaptively shifts in the shiftable area when a display direction does not change relative to the screen.

A specific shift manner is not limited in embodiments of this application, for example, may be diagonal shift, horizontal shift, upward and downward shift, or may be a combination of a plurality of types of shift.

In addition, an interval at which the shift occurs is not limited in this application. The shift may be performed at any equal intervals, or may be performed at any unequal intervals.

In embodiments of this application, for always on display in different system directions, a fixed initial location, shift range, and shift distance are no longer used. Instead, the proper shift information is adaptively calculated by using a height in a current screen direction, and the always on display and pixel shift for screen burn-in protection in different system directions are implemented based on the shift information, so that screen burn-in can be prevented more effectively, and a service life of the screen can be prolonged.

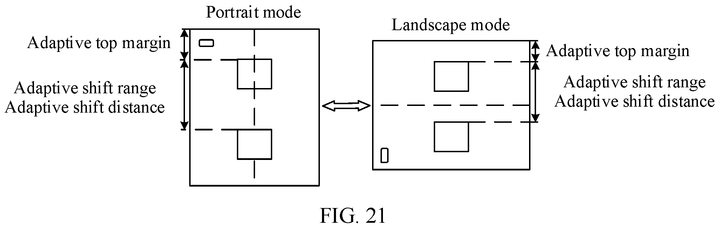

In correspondence with the embodiment shown in FIG. 20, FIG. 21 is a diagram of pixel shift for screen burn-in protection of always on display in different system directions according to an embodiment of this application. As shown in FIG. 21, when an always on display direction of an electronic device is switched between a portrait mode and a landscape mode, a top margin, a shift range, and/or a shift distance are/is adaptively adjusted, so that the pixel shift for screen burn-in protection of the always on display is adaptively performed on a display of the electronic device, and screen burn-in can be prevented more effectively.

Optionally, top margin coordinates are stored for always on display (always on display, AOD), and a live wallpaper reads the top margin coordinates, to determine, by using the top margin coordinates, a location at which a screen-off picture is displayed.

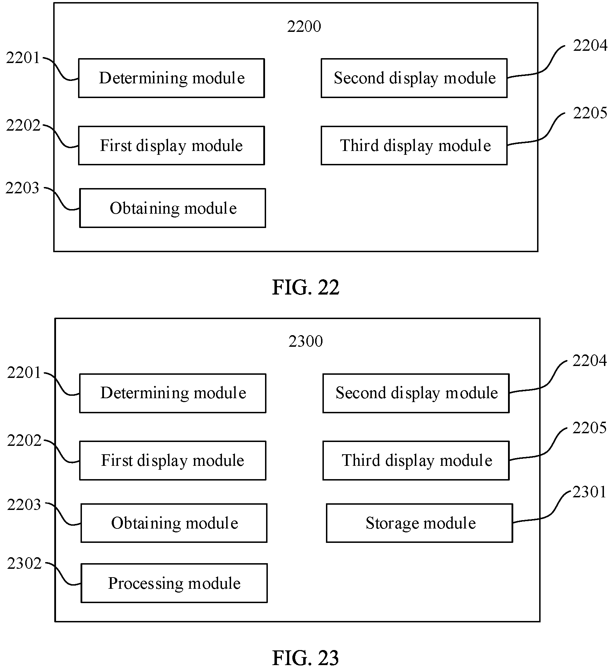

FIG. 22 is a diagram of functional modules of a live wallpaper display control apparatus 2200 according to an embodiment of this application. As shown in FIG. 22, the apparatus 2200 includes:
a determining module 2201, configured to: after a user triggers a lock screen function of an electronic device, determine whether the current electronic device supports live wallpaper display in different directions, where
optionally, the determining module 2201 may be further configured to: after the user triggers the lock screen function of the electronic device, determine whether a current screen needs to display a live wallpaper based on a current system direction, or after the user triggers the lock screen function of the electronic device, determine whether a display of the current electronic device is a large display;
optionally, the determining module 2201 is further configured to determine whether the current electronic device needs to adapt to always on display in different directions;
optionally, the determining module 2201 is further configured to determine whether the current electronic device supports screen folding; and
optionally, the determining module 2201 is further configured to determine whether a screen of a foldable screen device is in an unfolded state;
a first display module 2202, configured to display the live wallpaper on a lock screen page; and
an obtaining module 2203, configured to obtain the current system direction.

Optionally, the current system direction is determined by the obtaining module 2203 by using a current device posture of the electronic device, and specifically, may be obtained by the obtaining module 2203 by using a posture sensor in the electronic device. The posture sensor may include a gyroscope sensor or a triaxial acceleration sensor, and may further include another sensor. This is not limited in this application.

Specific explanation of the current system direction is described in detail in embodiments shown in FIG. 13 and FIG. 15. For brevity, details are not described herein again.

The first display module 2202 is specifically configured to display the live wallpaper on the lock screen page based on the current system direction.

A second display module 2204 is configured to perform the always on display on the screen-off page based on the current system direction.

A third display module 2205 is configured to display a home screen wallpaper in the current system direction.

Two or more display modules of the first display module 2202, the second display module 2204, and the third display module 2205 may be integrated into one general display module, and the integrated general display module has all functions of the two or more display modules.

It should be understood that the determining module 2201 is an optional module.

Optionally, the apparatus 2200 may further include a receiving module, configured to: receive a notification of locking the screen of the electronic device, and receive a notification of unlocking the electronic device.

In embodiments of this application, for a problem that a live wallpaper theme can only be displayed in a portrait orientation and cannot be displayed in different system directions of the electronic device in the conventional technology, the live wallpaper display control apparatus that can display the live wallpaper theme in different directions of the electronic device based on the system direction is provided. When a screen-off operation is performed on the electronic device, a lock screen application displays the live wallpaper based on the current system direction, and the screen-off page can implement the always on display in different system directions based on stored display locations and display resources, so that visual experience of the user can be improved. In addition, when the live wallpaper is a super wallpaper theme, home screen display, lock screen display, and the always on display can end up achieving super wallpaper animation effects associatively in different system directions of the electronic device, which further improves use experience of the user.

According to the embodiment shown in FIG. 22, FIG. 23 is a diagram of functional modules of a live wallpaper display control apparatus 2300 according to an embodiment of this application. As shown in FIG. 23, based on the apparatus 2200, the following functional modules are added to the apparatus 2300.

A storage module 2301 is configured to: when an always on display style is used, store display resources in a first direction and a second direction.

The first system direction and the second system direction are two of four system directions of an electronic device. The first system direction and the second system direction are perpendicular to each other and are at an included angle of 90°, and respectively represent a landscape orientation and a portrait orientation of the electronic device.

For example, the electronic device is a foldable phone. Based on a natural coordinate system of the phone, system directions of the foldable phone are: an x-axis positive direction, an x-axis negative direction, a y-axis positive direction, and a y-axis negative direction. The first system direction and the second system direction may be the x-axis positive direction and the y-axis positive direction respectively.

Optionally, the display resource in the first system direction includes a bitmap resource in the first system direction, and may further include another display resource. This is not limited in this application.

Similarly, the display resource in the second system direction includes a bitmap resource in the second system direction, and may further include another display resource. This is not limited in this application.

A processing module 2302 is configured to: when a user performs a screen-off operation on the electronic device, obtain display resources in a third system direction and a fourth system direction based on the display resources in the first system direction and the second system direction.

The third system direction and the first system direction are positive and negative directions of each other, and the fourth system direction and the second system direction are positive and negative directions of each other.

For example, the electronic device is a foldable phone. Based on a natural coordinate system of the phone, system directions of the foldable phone are: an x-axis positive direction, an x-axis negative direction, a y-axis positive direction, and a y-axis negative direction. The first system direction and the second system direction may be the x-axis positive direction and the y-axis positive direction respectively. Correspondingly, the third system direction and the fourth system direction are the x-axis negative direction and the y-axis negative direction respectively.

Optionally, the display resource in the third system direction includes a bitmap resource in the third system direction, and may further include another display resource. This is not limited in this application.

Similarly, the display resource in the fourth system direction includes a bitmap resource in the fourth system direction, and may further include another display resource. This is not limited in this application.

Specifically, the processing module 2302 performs byte reversal on the display resources (for example, the bitmap resources) in the first system direction and the second system direction, to obtain the display resources in the third system direction and the fourth system direction, thereby implementing the always on display in different system directions.

Optionally, the bitmap is stored in AGRB_4444 and RGB565 formats, two bytes represent one pixel, and the processing module 2302 implements bitmap reversal by reversing a byte sequence.

Optionally, in the always on display, the processing module 2302 is further configured to calculate shift information in a current system direction relative to a screen based on a ratio of a screen height in the current system direction to a screen height in an original system direction.

The shift information includes one or more of a top margin, a shift range, and a shift distance. In addition, the shift information may further include other information. This is not limited in this application.

For example, the system direction of the electronic device is switched from the landscape orientation to the portrait orientation, that is, the original system direction is the landscape orientation, and the current system direction is the portrait orientation. It is assumed that the screen height in the current system direction is 2, the screen height in the original system direction is 1, and the ratio of the screen height in the current system direction to the screen height in the original system direction is 2:1. A ratio of a top margin in the current system direction to a top margin in the original system direction is equal to 2:1, a ratio of a shift range in the current system direction to a shift range in the original system direction is equal to 2:1, and a ratio of a shift distance in the current system direction to a shift distance in the original system direction is equal to 2:1.

Optionally, the processing module 2302 is further configured to perform pixel shift for screen burn-in protection based on the shift information.

Explanation of the pixel shift for screen burn-in protection is described in detail in the embodiment shown in FIG. 20. For brevity, details are not described herein again.

In embodiments of this application, always on display in the four system directions of the electronic device can be implemented based on the current system direction, a display location in the current system direction, and display resources in two system directions, and the display resources corresponding to the four system directions do not need to be stored. The byte reversal only needs to be performed on display resources in two mutually perpendicular system directions, to implement the always on display in the four system directions, and reduce storage occupation of the electronic device. In addition, a byte rotation speed in embodiments of this application is far faster than a picture rotation speed used in the conventional technology, and display efficiency of the electronic device can be improved.

In addition, for the always on display in different system directions, a fixed initial location, shift range, and shift distance are no longer used. Instead, the proper shift information is adaptively calculated by using the height in the current screen direction, and the always on display and pixel shift for screen burn-in protection in different system directions are implemented based on the shift information, so that screen burn-in can be prevented more effectively.

One or more of the modules or units described in this specification may be implemented by software, hardware, or a combination thereof. When any one of the foregoing modules or units is implemented by software, the software exists in a form of computer program instructions, and is stored in a memory. A processor may be configured to execute the program instructions and implement the foregoing method procedure. The processor may include but is not limited to, at least one of a central processing unit (central processing unit, CPU), a microprocessor, a digital signal processor (DSP), a microcontroller unit (microcontroller unit, MCU), and a computing device used for running software like an artificial intelligence processor. Each computing device may include one or more cores used to execute software instructions to perform operations or processing. The processor may be built in an SoC (system on a chip) or an application-specific integrated circuit (application-specific integrated circuit, ASIC), or may be an independent semiconductor chip. In addition to the cores used to execute the software instructions to perform operations or processing, the processor may further include a necessary hardware accelerator, for example, a field programmable gate array (field programmable gate array, FPGA), a PLD (programmable logic device), or a logic circuit implementing a dedicated logical operation.

When the modules or units described in this specification are implemented by hardware, the hardware may be any one of or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software to execute the foregoing method procedure or execute the foregoing method procedure without software.

When the modules or units described in this specification are implemented by software, all or a part of embodiments may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

A person of ordinary skill in the art may be aware that the units and method steps described with reference to the examples in embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium, for example, a USB flash drive, a removable hard disk, a read-only memory (read-only memory, ROM), a random access memory (random access memory, RAM), a magnetic disk, an optical disc, or the like that can store program code.

The foregoing description is merely a specific implementation of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A live wallpaper display method, wherein the method is applied to an electronic device, the electronic device uses a live wallpaper theme, and the method comprises:
displaying a screen-off wallpaper; and
when a screen-on operation is detected, displaying, to a screen-on wallpaper, from animation effect of switching from the screen-off wallpaper to the screen-on wallpaper, wherein display directions of the animation effect and the screen-on wallpaper are able to change with rotation of a body of the electronic device, and the live wallpaper theme comprises the screen-off wallpaper and the screen-on wallpaper.

2. The method according to claim 1, wherein the screen-on wallpaper comprises a lock screen wallpaper and/or an unlocking wallpaper.

3. The method according to claim 2, wherein the method further comprises:
when the screen-on operation is detected, in response to unsuccessful unlocking of the electronic device, displaying, to the lock screen wallpaper, from animation effect of switching from the screen-off wallpaper to the lock screen wallpaper.

4. The method according to claim 2 or 3, wherein the method further comprises:
when the screen-on operation is detected, in response to successful unlocking of the electronic device, displaying, to the unlocking wallpaper, from animation effect of switching from the screen-off wallpaper to the unlocking wallpaper, or displaying, to the unlocking wallpaper, from animation effect of switching from the lock screen wallpaper to the unlocking wallpaper.

5. The method according to any one of claims 1 to 4, wherein the screen-off wallpaper and the screen-on wallpaper have a same visual theme.

6. The method according to any one of claims 1 to 5, wherein a display direction of the screen-off wallpaper is able to change with the rotation of the body of the electronic device.

7. The method according to any one of claims 1 to 6, wherein the method further comprises:
receiving a user setting operation; and
enabling a first function in response to the setting operation, wherein the first function comprises a function of changing a display direction of a live wallpaper with the rotation of the body of the electronic device.

8. The method according to any one of claims 1 to 7, wherein that display directions of the animation effect and the screen-on wallpaper are able to change with rotation of a body of the electronic device comprises:
if a body direction of the electronic device rotates from a vertical direction or a partially vertical direction to a horizontal direction or a partially horizontal direction, changing the display directions of the animation effect and the screen-on wallpaper from a portrait orientation to a landscape orientation.

9. The method according to any one of claims 1 to 8, wherein the live wallpaper theme is a super wallpaper theme; and in a display process of the super wallpaper theme, themes of the screen-off wallpaper and the screen-on wallpaper of the electronic device are the same, and pictures of the screen-off wallpaper and the screen-on wallpaper are in continuity with each other.

10. The method according to any one of claims 1 to 9, wherein the displaying a screen-off wallpaper comprises:
when an always on display style is used, storing display resources in a first direction and a second direction; and
obtaining display resources in a third direction and a fourth direction based on the display resources in the first direction and the second direction; and
displaying the screen-off wallpaper based on the body direction of the electronic device and the display resources, wherein
the first direction and the third direction have an included angle of 180° in the horizontal direction, and the second direction and the fourth direction have an included angle of 180° in the vertical direction.

11. The method according to any one of claims 5 to 10, wherein the displaying a screen-off wallpaper comprises:
calculating shift information in a current always on display direction of the electronic device relative to a screen of the electronic device based on a ratio of a screen height in the current always on display direction of the electronic device to a screen height in an always on display direction of the electronic device that does not change yet; and
displaying the screen-off wallpaper based on the shift information.

12. The method according to claim 11, wherein the shift information comprises one or more of a top margin, a shift range, and a shift distance.

13. The method according to any one of claims 1 to 12, wherein the method further comprises:
displaying the unlocking wallpaper; and
when a screen-off operation is detected, displaying, to the screen-off wallpaper, from animation effect of switching from the unlocking wallpaper to the screen-off wallpaper.

14. The method according to any one of claims 1 to 12, wherein the method further comprises:
displaying the lock screen wallpaper; and
when a screen-off operation is detected, displaying, to the screen-off wallpaper, from animation effect of switching from the lock screen wallpaper to the screen-off wallpaper.

15. An electronic device, comprising:
one or more processors;
one or more memories; and
one or more computer programs, wherein the one or more computer programs are stored in the one or more memories, the one or more computer programs comprise instructions, and when the instructions are executed by the one or more processors, the electronic device is enabled to perform the method according to any one of claims 1 to 14.

16. The electronic device according to claim 15, wherein the electronic device is a foldable screen device, the foldable screen device is in an unfolded state, and the unfolded state comprises a fully unfolded state and/or a partially unfolded state.

17. A display system, wherein the display system comprises one or more electronic devices according to claim 15 or 16.

18. A computer-readable storage medium, wherein the storage medium stores a program or instructions, and when the program or the instructions are run, the method according to any one of claims 1 to 14 is implemented.
